# EUROPEAN PATENT APPLICATION

(11) **EP 4 819 746 A1**
(43) Date of publication of application: **07.10.2026**
(21) Application number: 25739131.8
(22) Date of filing: 10.01.2025
(51) Int. Cl.: H04W 74/04, H04W 74/00, H04W 74/0816, H04W 72/0446, H04W 84/12, H04B 7/024, H04W 72/21, H04W 72/50, H04L 5/00

(54) **TRIGGER FRAME DESIGN IN AP SELECTION PROCEDURE FOR MULTI-AP COOPERATION IN WIRELESS LAN SYSTEM**

(30) Priority: 12.01.2024 KR 20240005617; 08.03.2024 KR 20240033454; 07.05.2024 KR 20240060141; 04.07.2024 KR 20240088455; 12.08.2024 KR 20240107751
(71) Applicant: LG Electronics Inc., Yeongdeungpo-gu Seoul 07336 (KR)
(72) Inventor: KIM, Geonhwan, Seoul 06772 (KR); CHOI, Jinsoo, Seoul 06772 (KR); JANG, Insun, Seoul 06772 (KR); BAEK, Sunhee, Seoul 06772 (KR); YOON, Yelin, Seoul 06772 (KR); CHA, Dongju, Seoul 06772 (KR)
(74) Representative: Plasseraud IP
(86) International application number: PCT/KR2025/000617
(87) International publication number: WO 2025/150971

(57) **Abstract**

The present disclosure relates to a trigger frame design in an AP selection procedure for multi-AP cooperation in a wireless LAN system. According to an embodiment of the present disclosure, a method performed by a first AP in a wireless LAN system comprises the steps of: performing a negotiation procedure for multi-AP cooperation with neighboring APs; configuring a multi-AP set including the neighboring APs on the basis of the negotiation procedure; transmitting, to a second AP included in the multi-AP set, a selection request frame for starting the multi-AP cooperation with the second AP; receiving, from the second AP, a selection response frame for the selection request frame; and, on the basis of receiving the selection response frame, transmitting, to the second AP, a TXOP sharing frame including information about an allocation period.

## Description

### Technical field

The present disclosure is related to a trigger frame design in an access point (AP) selection procedure for multi-AP coordination in a wireless local area network (WLAN) system.

### Background Art

Next-generation Wi-Fi (e.g., IEEE 802.11be and/or later) aims to support ultra-high reliability in signaling to STAs, and various technologies are being considered to support high throughput, low latency, and extended range. For example, the APs may perform a negotiation procedure for multi-AP coordination to configure a multi-AP set, and may select an AP for initiating the multi-AP coordination from among the APs included in the multi-AP set. A Trigger Frame transmitted in the AP selection procedure needs to be designed.

### Disclosure of Invention

### Technical Problem

An aspect of the present disclosure is to provide method and apparatus for a trigger frame design in an AP selection procedure for multi-AP coordination in a WLAN system.

### Solution to Problem

According to an embodiment of the present disclosure, a method performed by a first AP in a wireless LAN system comprises: performing a negotiation procedure for multi-AP coordination with neighbor APs; based on the negotiation procedure, configuring a multi-AP set including the neighbor APs; transmitting to a second AP included in the multi-AP set, a selection request frame for initiating the multi-AP coordination with the second AP; receiving, from the second AP, a selection response frame for the selection request frame; and based on receiving the selection response frame, transmitting, to the second AP, a TXOP sharing frame including information for an allocation duration.

According to an embodiment of the present disclosure, a method performed by a second AP in a wireless LAN system comprises: performing a negotiation procedure for multi-AP coordination with neighbor APs; based on the negotiation procedure, configuring a multi-AP set including the neighbor APs; receiving, from a first AP included in the multi-AP set, a selection request frame for initiating the multi-AP coordination with the second AP; transmitting, to the first AP, a selection response frame for the selection request frame; and after transmitting the selection response frame, receiving, from the first AP, a TXOP sharing frame including information for an allocation duration.

In various embodiments, apparatuses implementing the above methods are provided.

### Advantageous Effect

The present disclosure may have various advantageous effects.

For example, in the present disclosure, a structure/format of a Trigger Frame transmitted for an SAP to select a DAP that is to perform multi-AP coordination-based transmission in multi-AP operation/C-TDMA operation is defined. Using the Trigger Frame according to various embodiments of the present disclosure, the SAP may perform a multi-AP selection procedure for selecting a DAP.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### Brief Description of Drawings

FIG. 1 illustrates an example of a transmitting apparatus and/or receiving apparatus of the present disclosure.
FIG. 2 is a conceptual view illustrating the structure of a wireless local area network (WLAN).
FIG. 3 illustrates a general link setup process.
FIG. 4 illustrates an example of a multi-link (ML).
FIG. 5 illustrates a modified example of a transmitting device and/or a receiving device of the present disclosure.
FIG. 6 illustrates an example of a physical protocol data unit or physical layer (PHY) protocol data unit (PPDU) transmitted/received by an STA of the present disclosure.
FIG. 7 illustrates the layout of resource units (RUs) used for a 20 MHz PPDU.
FIG. 8 illustrates the layout of resource units (RUs) used for 40MHz PPDU.
FIG. 9 illustrates the layout of resource units (RUs) used for an 80MHz PPDU.
FIG. 10 illustrates an operation related to UL-MU.
FIG. 11 illustrates an example of channels used/supported/defined within the 2.4 GHz band.
FIG. 12 illustrates an example of channels used/supported/defined within the 5 GHz band.
FIG. 13 illustrates an example of channels used, supported, and defined within the 6 GHz band.
FIG. 14 illustrates an example of a procedure related to NAV setting.
FIG. 15 illustrates a trigger frame format. The trigger frame format may also be referred to as the structure of a trigger frame.
FIG. 16 illustrates an example of the User Info field format of the MU-RTS TXS TF.
FIG. 17 shows an example of an operation diagram of single TXOP-based coordinated time division multiple access (Co-TDMA) between coordinating APs.
FIG. 18 illustrates an example of a multi-AP selection procedure according to an embodiment of the present disclosure.
FIG. 19 illustrates an example of a method performed by a first AP according to an embodiment of the present disclosure.
FIG. 20 shows an example of a method performed by a second AP according to an embodiment of the present disclosure.
FIG. 21 illustrates an example of a MAP Trigger Frame format for a multi-AP selection procedure according to an embodiment of the present disclosure.
FIG. 22 illustrates an example of a MAP-RTS Trigger Frame format for a multi-AP selection procedure.
FIG. 23 illustrates an example of a MU-RTS TXS Trigger Frame format for a multi-AP selection procedure according to an embodiment of the present disclosure.
FIG. 24 illustrates an example of a BSRP Trigger Frame format for a multi-AP selection procedure according to an embodiment of the present disclosure.
FIG. 25 illustrates a first example of a UHR Special User Info field according to an embodiment of the present disclosure.
FIG. 26 illustrates a second example of a UHR Special User Info field according to an embodiment of the present disclosure.

### Mode for the Invention

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

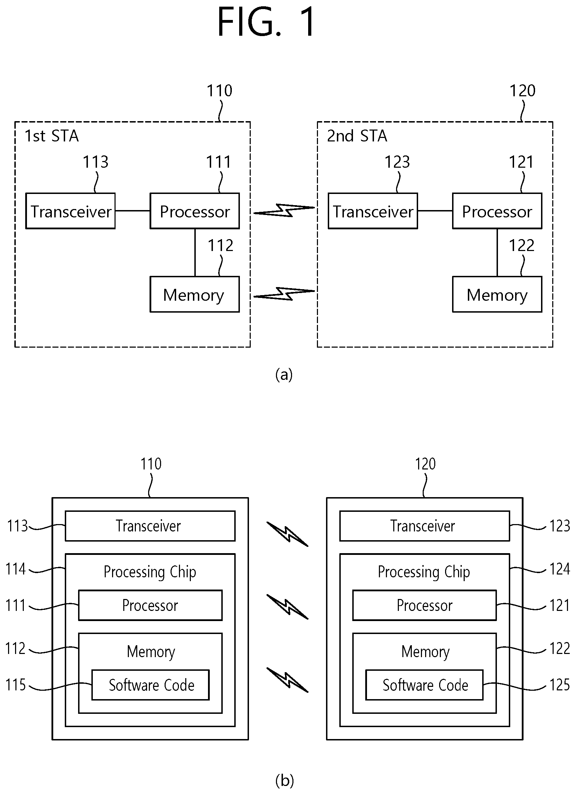

FIG. 1 illustrates an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGON^{®} series of processors made by Qualcomm^{®}, EXYNOS^{®} series of processors made by Samsung^{®}, A series of processors made by Apple^{®}, HELIO^{®} series of processors made by MediaTek^{®}, ATOM^{®} series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

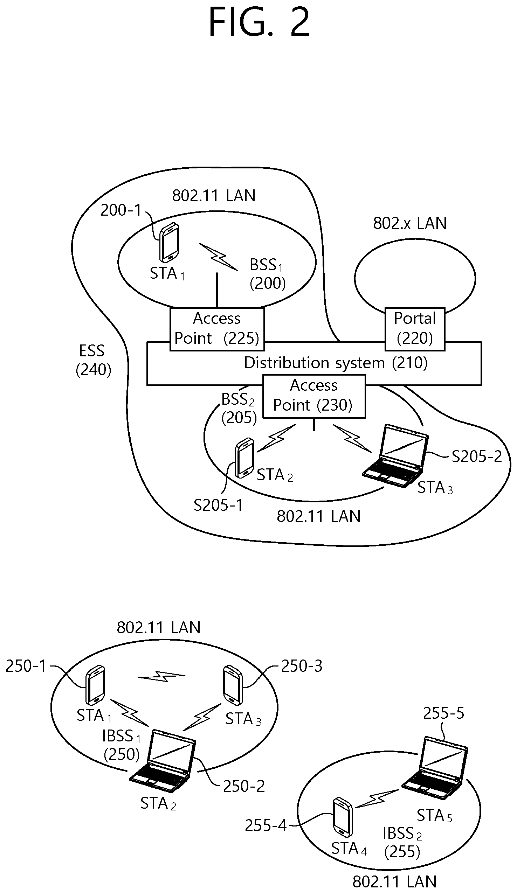

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, APs providing a distribution service, and a distribution system (DS) 210 connecting multiple APs.

The distribution system 210 may implement an extended service set (ESS) 240 extended by connecting the multiple

BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

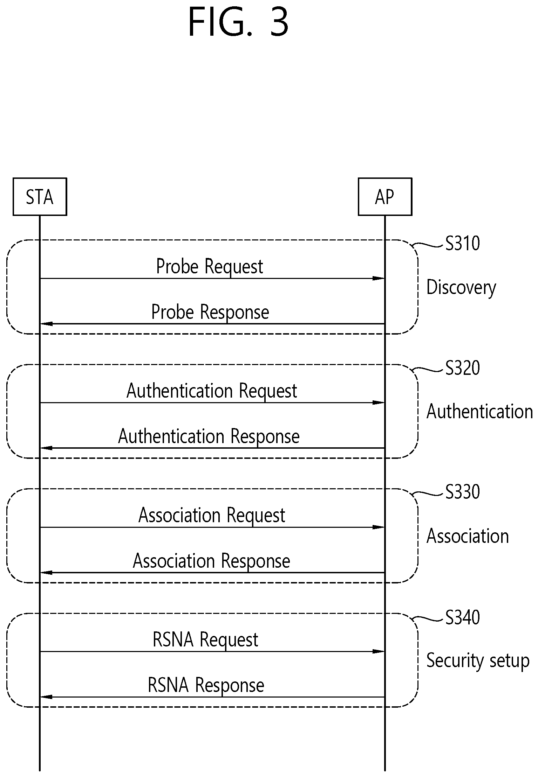

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

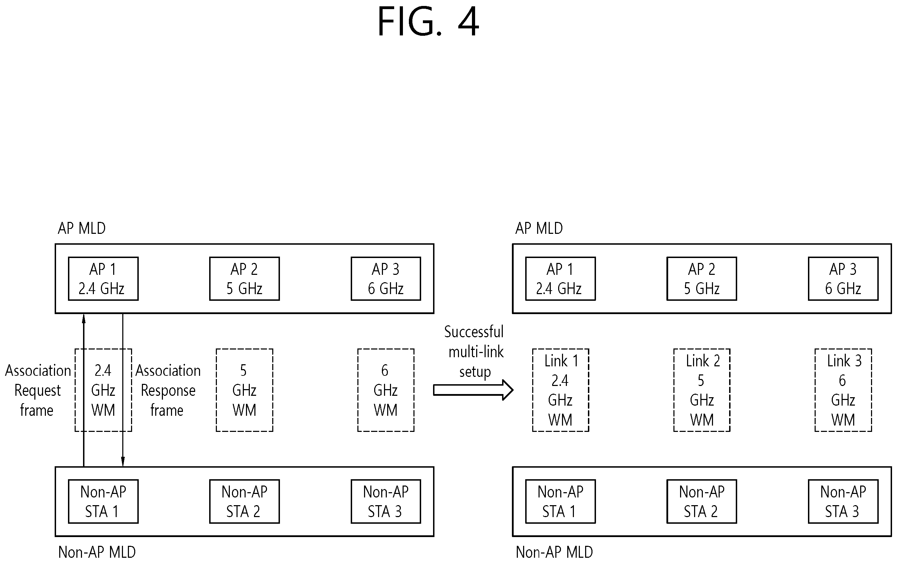

FIG. 4 illustrates an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

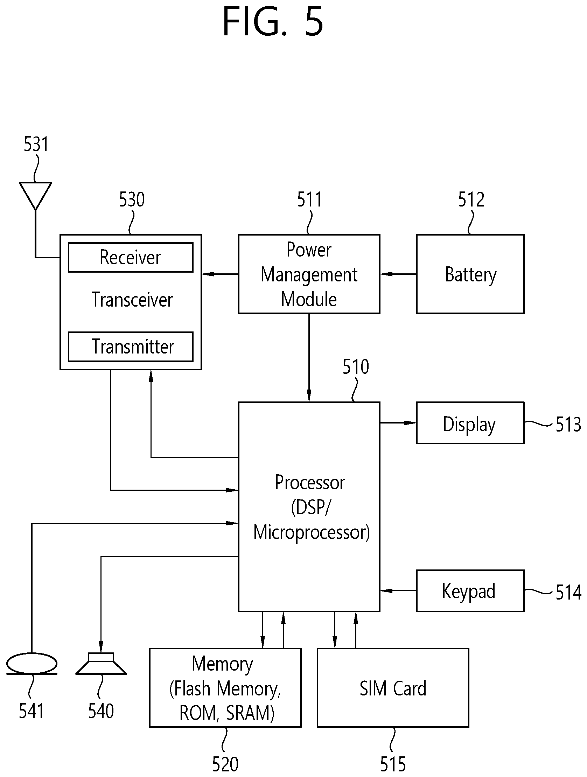

FIG. 5 illustrates a modified example of a transmitting device and/or a receiving device of the present disclosure.

The devices (e.g., AP STA, non-AP STA) shown in FIGS. 1 to 4 can be modified as shown in FIG. 5. The transceiver 530 of FIG. 5 can be identical to the transceiver 113, 123 of FIG. 1. The transceiver 530 of FIG. 5 can include a receiver and a transmitter.

The processor 510 of FIG. 5 can be identical to the processor 111, 121 of FIG. 1. Alternatively, the processor 510 of FIG. 5 can be identical to the processing chip 114, 124 of FIG. 1.

The memory 150 of FIG. 5 may be the same as the memory 112, 122 of FIG. 1. Alternatively, the memory 150 of FIG. 5 may be a separate external memory different from the memory 112, 122 of FIG. 1.

Referring to FIG. 5, the power management module 511 manages power for the processor 510 and/or the transceiver 530. The battery 512 supplies power to the power management module 511. The display 513 outputs the result processed by the processor 510. The keypad 514 receives input to be used by the processor 510. The keypad 514 may be displayed on the display 513. The SIM card 515 may be an integrated circuit used to securely store an international mobile subscriber identity (IMSI) and its associated keys, which are used to identify and authenticate subscribers in mobile devices such as mobile phones and computers.

Referring to FIG. 5, the speaker (540) may output sound-related results processed by the processor 510. The microphone (541) may receive sound-related input to be used by the processor 510.

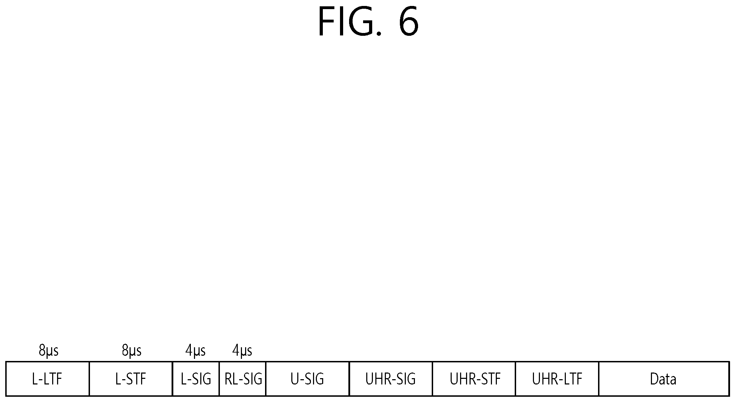

FIG. 6 illustrates an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 6. The PPDU described in the present disclosure can have, for example, a structure of FIG. 6. In addition, the PPDU described in the present disclosure can be called by various names such as a transmission PPDU, a reception PPDU, a first type or an Nth type PPDU, etc. The PPDU described in the present disclosure can be used in a WLAN system defined according to IEEE 802.11bn and/or a next-generation WLAN system that improves IEEE 802.11bn.

The PPDU of FIG. 6 can be related to various PPDU types used in a UHR system. For example, the example of FIG. 6 can be used for at least one of single-user (SU) mode/type/transmission, multi-user (MU) mode/type/transmission, and null-data packet (NDP) mode/type/transmission related to channel sounding. For example, if the example of FIG. 6 is related to NDP, the data field illustrated can be omitted. If the PPDU of FIG. 6 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 6.

In FIG. 6, L-STF or UHR-LTF may be called a preamble or a physical preamble, and may be generated/transmitted/received/acquired/decoded in the physical layer (included in the transmitting/receiving STA).

Each block illustrated in FIG. 6 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 6.

A subcarrier spacing of the L-STF, L-LTF, L-SIG, RL-SIG, U-SIG, and UHR-SIG fields of FIG. 6 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 6, the L-LTF and the L-STF may be the same as those in the conventional fields (for example, non-HT LTF and non-HT STF defined in conventional WLAN standards).

The L-SIG field of FIG. 6 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (CBF), spatial reuse (SR), type related to coordinated OFDMA (C-OFDMA), type related to coordinated TDMA (CTDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 6. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 6 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 6 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

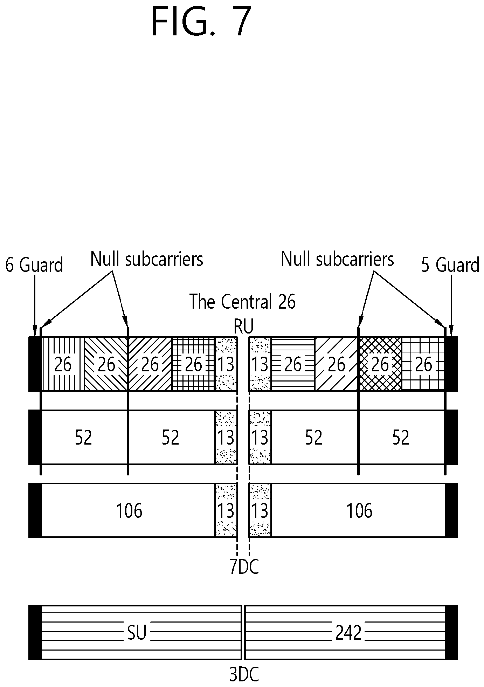

FIG. 7 illustrates the layout of resource units (RUs) used for a 20 MHz PPDU. That is, the UHR-LTF, UHR-STF, and/or data fields included in the 20 MHz PPDU can be transmitted/received through at least one of the various RUs defined in FIG. 7.

As illustrated in the uppermost part of FIG. 7, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

The layout of the RUs in FIG. 7 may be used not only for a multiple users (MUs) but also for a single user (SU), in which case one 242-unit may be used and three DC tones may be inserted as illustrated in the lowermost part of FIG. 7.

Although FIG. 7 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In the present disclosure, N-RU may be represented as N-tone RU, etc. For example, 26-RU may be represented as 26-tone RU.

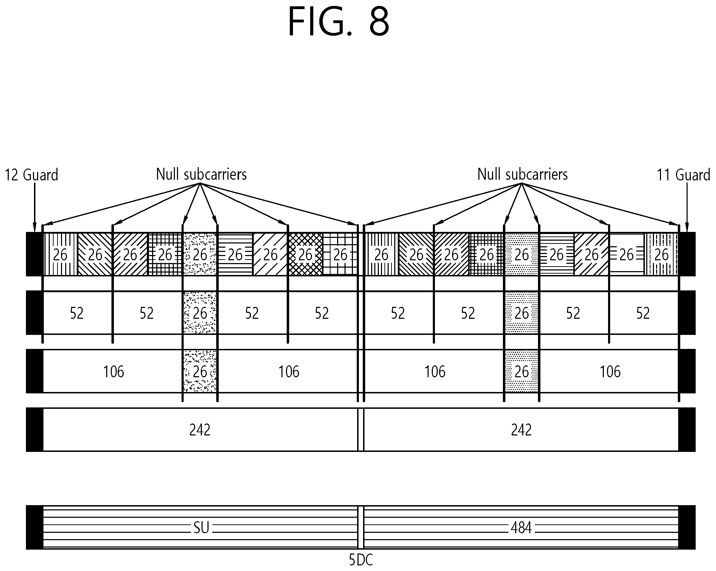

FIG. 8 illustrates the layout of resource units (RUs) used for 40MHz PPDU.

Similarly to FIG. 7 in which RUs having various sizes are used, a 26-RU, a 52-RU, a 106-RU, a 242-RU, a 484-RU, and the like may be used in an example of FIG. 8. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 8, when the layout of the RUs is used for a single user, a 484-RU may be used. The specific number of RUs may be changed similarly to FIG. 7.

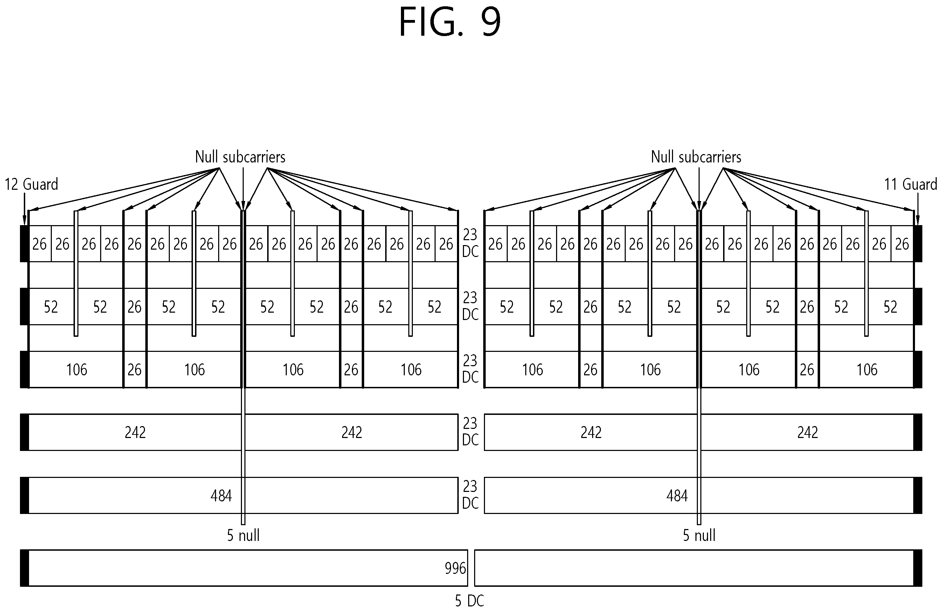

FIG. 9 illustrates the layout of resource units (RUs) used for an 80MHz PPDU. The layout of the resource units (RUs) used in the present disclosure may vary. For example, the layout of the resource units (RUs) used in the 80MHz band may vary.

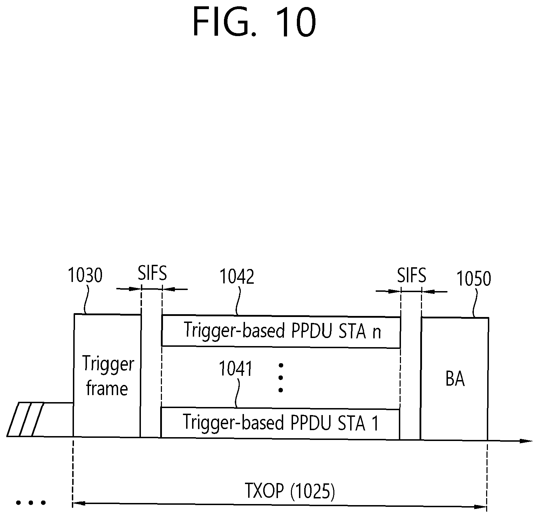

FIG. 10 illustrates an operation related to UL-MU. As shown, a transmitting STA (e.g., AP) can obtain TXOP 1025 by performing channel access through contending (i.e., backoff operation) and transmit trigger frame 1030. That is, the transmitting STA (e.g., AP) can transmit PPDU including trigger frame 1030. When PPDU including trigger frame is received, trigger-based (TB) PPDU is transmitted after delay of SIFS.

TB PPDU 1041, 1042 can be transmitted at the same time and transmitted from multiple STA (e.g., user STA) whose AID is indicated in trigger frame 1030. ACK frame 1050 for TB PPDU can be implemented in various forms. For example, ACK frame 1050 for TB PPDU can be implemented in the form of block ACK (BA).

In FIG. 10, transmission(s) of trigger Frame 1030, TB PPDU 1041, 1042 and/or ACK Frame 1050 can be performed within TXOP 1025.

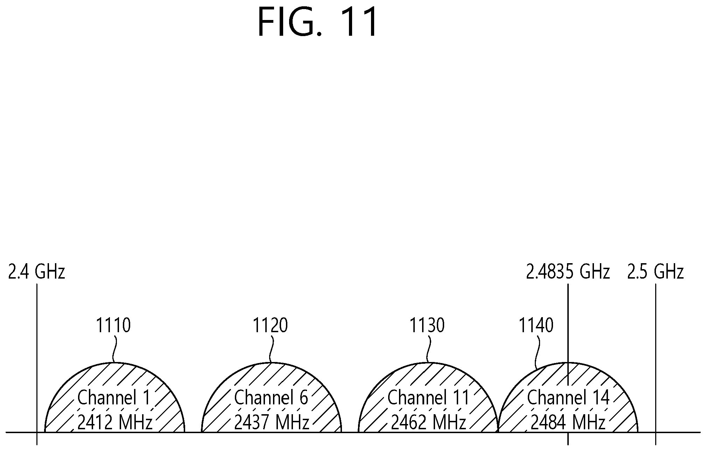

FIG. 11 illustrates an example of channels used/supported/defined within the 2.4 GHz band.

The 2.4 GHz band may also be referred to by other names, such as "first band." Furthermore, the 2.4 GHz band may refer to a frequency range in which channels with a center frequency adjacent to 2.4 GHz (e.g., channels with a center frequency between 2.4 and 2.5 GHz) are used/supported/defined.

The 2.4 GHz band may include multiple 20 MHz channels. Each 20 MHz within the 2.4 GHz band may have multiple channel indices (e.g., indices 1 through 14). For example, the center frequency of a 20 MHz channel assigned with channel index 1 may be 2.412 GHz, the center frequency of a 20 MHz channel assigned with channel index 2 may be 2.417 GHz, and the center frequency of a 20 MHz channel assigned with channel index N may be (2.407 + 0.005*N) GHz. Channel indices may be referred to by various names, such as channel numbers. The specific numerical values of the channel indices and center frequencies may vary.

FIG. 11 illustrates examples of four channels within the 2.4 GHz band. The illustrated first frequency region 1110 to fourth frequency regions 1140 may each include one channel. For example, the first frequency region 1110 may include channel 1 (a 20 MHz channel with index 1). In this case, the center frequency of channel 1 may be set to 2412 MHz. The second frequency range 1120 may include channel 6. The center frequency of channel 6 may be set to 2437 MHz. The third frequency range 1130 may include channel 11. The center frequency of channel 11 may be set to 2462 MHz. The fourth frequency range 1140 may include channel 14. The center frequency of channel 14 may be set to 2484 MHz.

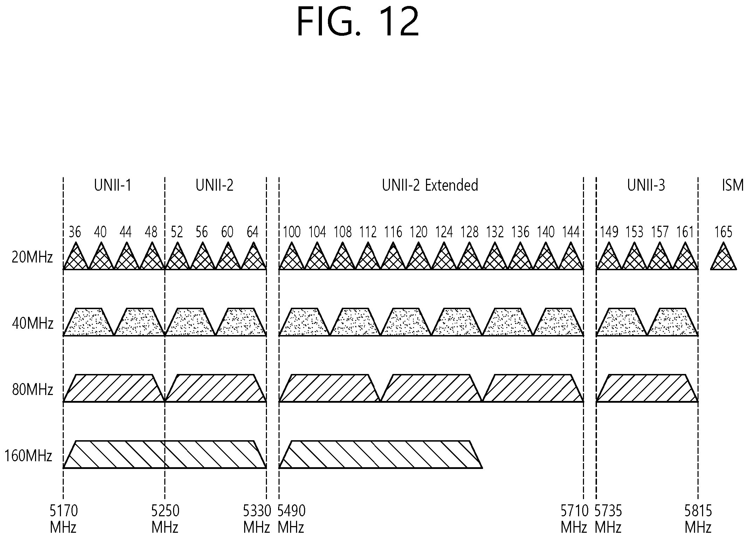

FIG. 12 illustrates an example of channels used/supported/defined within the 5 GHz band.

The 5 GHz band may be referred to by other names, such as "second band" or "band." The 5 GHz band may refer to a frequency range in which channels with a center frequency of 5 GHz or more but less than 6 GHz (or less than 5.9 GHz) are used/supported/defined. Alternatively, the 5 GHz band may include multiple channels between 4.5 GHz and 5.5 GHz. The specific numerical values shown in FIG. 12 may vary.

The multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Multiple channels may be configured within the 5 GHz band, and the bandwidth of each channel may vary, such as 20 MHz, 40 MHz, 80 MHz, or 160 MHz. For example, the 5170 MHz to 5330 MHz frequency range within UNII-1 and UNII-2 may be divided into eight 20 MHz channels. The 5170 MHz to 5330 MHz frequency range can be divided into four channels across a 40 MHz frequency band. The 5170 MHz to 5330 MHz frequency range can be divided into two channels across an 80 MHz frequency band. Alternatively, the 5170 MHz to 5330 MHz frequency range can be divided into one channel across a 160 MHz frequency band.

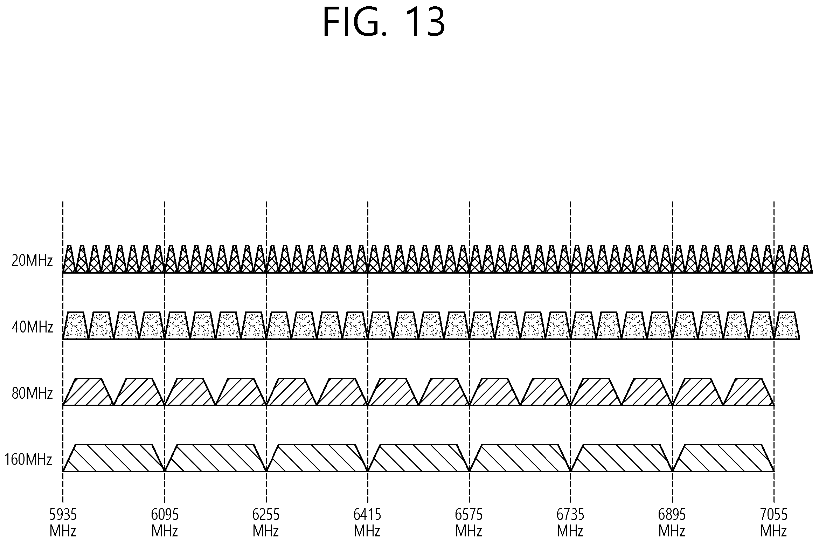

FIG. 13 illustrates an example of channels used, supported, and defined within the 6 GHz band.

The 6 GHz band may also be referred to by other names, such as the third band. The 6 GHz band may refer to a frequency range in which channels with center frequencies above 5.9 GHz are used, supported, and defined. The specific numbers shown in FIG. 13 may vary.

For example, the 20 MHz channel in FIG. 13 may be defined starting from 5.940 GHz. Specifically, the leftmost channel among the 20 MHz channels in FIG. 13 may have an index of 1 (or channel index, channel number, etc.), and a center frequency of 5.945 GHz may be assigned. That is, the center frequency of the index N channel may be determined as (5.940 + 0.005*N) GHz.

Accordingly, the indexes (or channel numbers) of the 20 MHz channels of FIG. 13 are 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, It can be 197, 201, 205, 209, 213, 217, 221, 225, 229, 233. Also, according to the (5.940 + 0.005*N) GHz rule mentioned above, the indices of the 40 MHz channels in FIG. 13 can be 3, 11, 19, 27, 35, 43, 51, 59, 67, 75, 83, 91, 99, 107, 115, 123, 131, 139, 147, 155, 163, 171, 179, 187, 195, 203, 211, 219, 227.

Meanwhile, STAs having data available for transmission may perform clear channel assessment (CCA) for sensing a medium during a specific period (for example, distributed coordination function (DCF) inter-frame space (DIFS)) before transmitting data. At this time, if the medium is idle, the STA can perform transmission using the medium. However, if the medium is busy, it can be assumed that several STAs are already waiting to use the medium, and the STA can transmit data after waiting for a random backoff duration in addition to the DIFS. At this time, the random backoff duration allows collision avoidance, because when it is assumed that there are several STAs for transmitting data, each STA probabilistically has a different backoff duration value and eventually has a different transmission time. Once one STA starts transmission, other STAs cannot use the medium.

In a random backoff procedure, if a specific medium changes from a busy state to an idle state, several STAs start preparation for sending data. At this time, in order to minimize collisions, STAs intending to transmit data respectively select a random backoff count, and wait for a slot time corresponding to the selected counter. The random backoff count is a pseudo-random integer value and one of values uniformly distributed in a range of [0 CW] is selected. CW means a contention window. The CW parameter takes a CWmin value as an initial value, but if transmission fails, the value is increased by two times. For example, if an ACK response for a transmitted data frame has not been received, it can be considered that a collision has occurred. If the CW value reaches a CWmax value, the CWmax value is maintained until data transmission succeeds, and if data transmission succeeds, the CW value is reset to the CWmin value. At this time, CW, CWmin, and CWmax may be expressed as 2^n-1 for convenience of implementation and operation. Meanwhile, when a random backoff procedure starts, a STA selects a random backoff count within a range of [0 CW], and then continues to monitor the medium while a backoff slot is counted down. If the medium becomes busy in the meantime, it stops the countdown and then resumes the countdown of the remaining backoff slots when the medium becomes idle again.

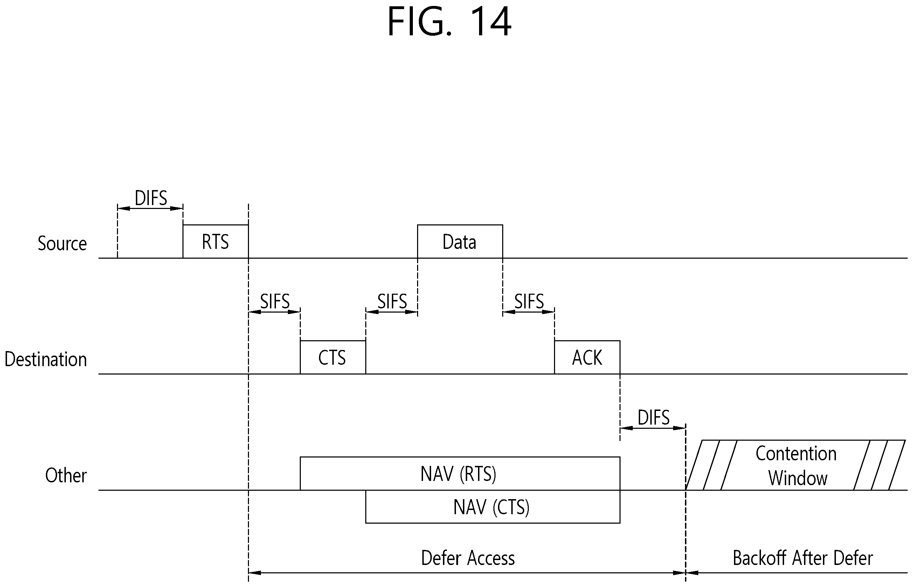

FIG. 14 illustrates an example of a procedure related to NAV setting.

Referring to FIG. 14, when a Source (e.g., an AP STA/non-AP STA) intending to transmit data transmits a request-to-send (RTS) frame to a Destination (e.g., an AP STA/non-AP STA) receiving the data, the Destination can transmit a clear-to-send (CTS) frame to neighboring stations to notify them that it will receive the data. In other words, the Destination designated as the receiver through the RTS frame can transmit a CTS frame. If the Source that transmitted the RTS frame receives the CTS frame, the Source can initiate data transmission to the Destination.

Meanwhile, if a STA other than the Destination designated as the receiver through the RTS frame receives the RTS frame, or if a STA other than the Source that transmitted the RTS frame receives the CTS frame, the STA can configure a network allocation vector (NAV). A STA that has set a NAV may not transmit data during the NAV period, which allows the STA to avoid collisions between the STA and the Source/Destination. On the other hand, if the Destination designated as the receiver through the RTS frame receives the RTS frame, or if the Source that transmitted the RTS frame receives a CTS frame, the Source/Destination does not set a NAV.

If a CTS frame (e.g., PHY-RXSTART.indication primitive) is not received within a certain period from the time the RTS frame is received (e.g., the time when the MAC receives the PHY-RXEND.indication primitive corresponding to the RTS frame), STAs that have set or updated a NAV through the RTS frame may reset the NAV (e.g., to 0). The certain period may be (2*aSIFSTime + CTS_Time + aRxPHYStartDelay + 2*aSlotTime). The CTS_Time can be calculated based on the length and data rate of the CTS frame indicated by the RTS frame.

For convenience of description, FIG. 14 illustrates setting or updating the NAV through the RTS frame or the CTS frame. However, NAV setting/resetting/updating can also be performed based on the duration field of various other frames, such as non-HT PPDU, HT PPDU, VHT PPDU, or HE PPDU (e.g., the duration field in the MAC header of a MAC frame). For example, if the RA field in a received MAC frame/RTS frame/CTS frame does not match its own address (e.g., MAC address), The STA may set, reset, or update the NAV based on the value of the Duration field in the received MAC frame/RTS frame/CTS frame.

A non-AP STA shall maintain two NAVs, and an AP may maintain two NAVs: an intra-BSS NAV and a basic NAV. The intra-BSS NAV may be updated/set by an intra-BSS PPDU. The basic NAV may be updated /set by an inter-BSS PPDU or a PPDU that cannot be classified as intra-BSS or inter-BSS.

The MAC frames included in the data field of the PPDU of the present disclosure can be classified into various types. For example, the MAC frames of the present disclosure can be classified into control frames, management frames, and data frames.

For example, the management frame includes Association Request, Association Response, Reassociation Request, Reassociation Response, Probe Request, Probe Response, Beacon, Disassociation, Authentication, and Deauthentication frames/signals defined in conventional WLANs. For the management frame, the value of the type field (B3 and B2) of the MAC header is set to 00. Additionally, the values of the subtype fields (B7, B6, B5, B4) of the MAC header are as follows: Association Request (0000), Association Response (0001), Reassociation Request (0010), Reassociation Response (0011), Probe Request (0100), Probe Response (0101), Beacon (1000), Disassociation (1010), Authentication (1011), Deauthentication (1100).

For example, the control frame includes the Trigger Beamforming Report Poll, NDP Announcement (NDPA), Control Frame Extension, Control Wrapper, Block Ack Request (BlockAckReq), Block Ack (BlockAck), PS-Poll, RTS, CTS, Ack, and CF-End frames/signals defined in conventional WLANs. For the control frame, the values of the type fields (B3 and B2) of the MAC header are set to 01. Additionally, the values of the subtype fields (B7, B6, B5, B4) of the MAC header are as follows: Trigger

(0010), Beamforming Report Poll (0100), NDP Announcement (0101), Control Frame Extension (0110), Control Wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc., as defined in conventional WLANs. For this data frame, the values of the type fields (B3 and B2) of the MAC header are set to 10.

The type of the MAC frame used in the present disclosure may be identified through the type field/information and the subtype field/information included in the frame control field of the header of the MAC frame (i.e., the MAC header). For example, the "trigger frame" of the present disclosure may mean a MAC frame in which the type bits B3 and B2 in the frame control field of the MAC header are set to 01, and the subtype bits B7, B6, B5, and B4 in the frame control field are also set to 0010. Various MAC frames described in the present disclosure are inserted/included in the data field of various PPDUs (e.g., HE/VHT/HE/EHT/UHR PPDUs).

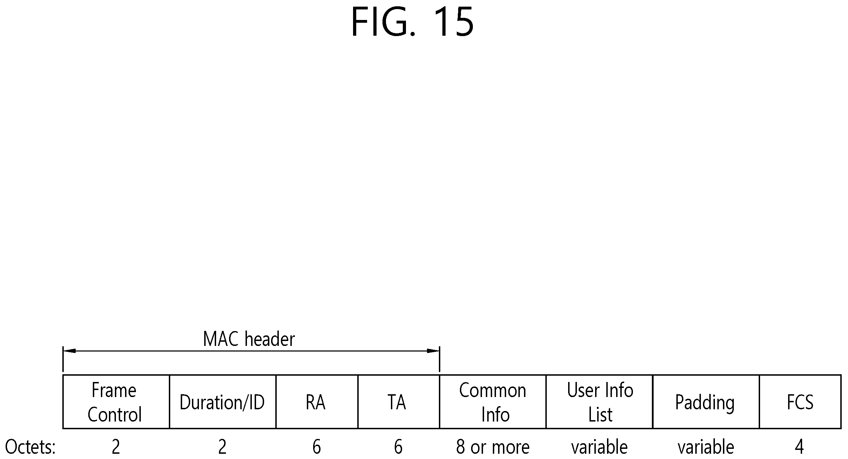

FIG. 15 illustrates a trigger frame format. The trigger frame format may also be referred to as the structure of a trigger frame.

Referring to FIG. 15, a trigger frame may include a frame control field, a duration/ID field, a receiver address (RA) field, a transmitter address (TA) field, a Common Info field, a User Info list field, a padding field, and/or a frame check sequence (FCS) field. Optionally, the trigger frame may further comprise a special User Info field between the Common Info field and the User Info list field. The User Info list field may include one or more User Info fields. The frame control field, duration/ID field, RA field, and TA field may constitute a MAC header.

For example, the common information field may comprise a trigger type subfield. The value of the trigger type subfield may indicate a variant of the trigger frame as shown in <Table 1>:

**[Table 1]**

| **Trigger type subfield value** | **Trigger frame variant** |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8 | Ranging |
| 9-15 | Reserved |

For example, if the value of the trigger type subfield is set to 0, the trigger frame may be a basic trigger frame. For example, if the value of the trigger type subfield is set to 3, the trigger frame may be a multi-user (MU) RTS trigger frame. Meanwhile, according to the EHT (i.e., 802.11be) standard, an AP can allocate a portion of the time duration within the TXOP obtained by the AP to support peer-to-peer (P2P) transmission to a non-AP STA. To allocate a portion of the time duration within a TXOP, a TXOP Sharing Mode subfield may be defined within the Common Info Field of the MU-RTS Trigger frame. When the value of the TXOP Sharing Mode subfield is non-zero, such a MU-RTS trigger frame may be referred to as a MU-RTS TXOP Sharing (TXS) Trigger frame (TF). A description of the values of the TXOP sharing mode subfield is shown in <Table 2> below:

**[Table 2]**

| **Triggered TXOP Sharing Mode subfield value** | **Description** |
|---|---|
| 0 | MU-RTS that does not initiate MU-RTS TXOP sharing procedure. |
| 1 | MU-RTS that initiates MU-RTS TXOP sharing procedure wherein a scheduledSTA can only transmit MPDU(s) addressed to its associated AP. |
| 2 | MU-RTS that initiates MU-RTS TXOP sharing procedure wherein a scheduled STA can transmit MPDU(s) addressed to its associated AP or addressed to another STA. |
| 3 | Reserved. |

For example, if the TXOP sharing mode subfield has a value of 1, one or more (non-TB) PPDU transmissions to the AP can be supported. If the TXOP sharing mode subfield has a value of 2, both (non-TB) PPDU transmission to the AP and P2P transmission can be supported. In this disclosure, the MU-RTS TXS TF may also be referred to simply as a TXS trigger frame.

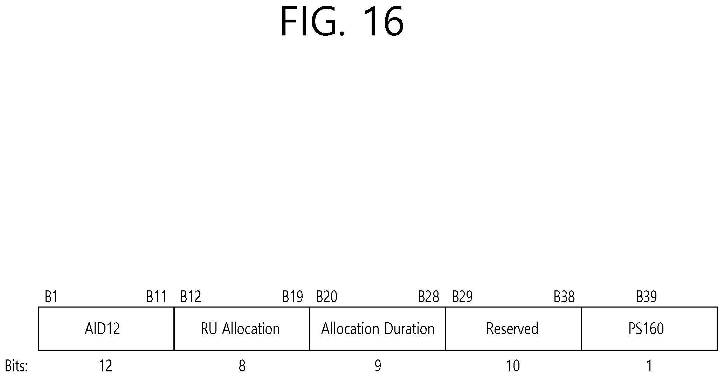

FIG. 16 illustrates an example of the User Info field format of the MU-RTS TXS TF.

Referring to FIG. 16, the User Info field may include an AID subfield, an RU allocation subfield, an allocation duration subfield, reserved bits, and/or a PS160 subfield.

The AID subfield may indicate the AID for the corresponding STA. The RU allocation subfield may indicate RU allocation for the corresponding STA.

The allocation duration subfield may include 9 bits from B20 to B28 in the MU-RTS TXS TF and may indicate an allocation duration in 16us units. In this case, the maximum length of the allocation duration indicated by the allocation duration subfield may be 2^9 = 8192 us.

The PS160 subfield may indicate the primary 160 MHz channel or the secondary 160 MHz channel to which RU or MRU allocation applies.

Meanwhile, many APs are being installed adjacent to each other to enable STAs to maintain continuous WLAN connections over a wider area. However, overlapping BSSs of multiple APs can lead to issues such as radio interference and transmission collisions between APs. To address these issues, various technologies related to coordination between APs in the frequency, time, and spatial domains (e.g., RU selection, joint transmission, nulling) have been proposed. Various issues that may arise during inter-AP coordination need to be addressed.

In the present disclosure, a multi-AP operation is proposed. The multi-AP operation may be based on a technique of reducing various interferences such as inter-symbol interference (ISI) through coordination with a neighboring AP (for example, an AP located in an overlapping BSS).

For example, the multi-AP operation may be classified into a multi-AP coordination scheme (or, a coordination scheme) based on various techniques/types/formats/protocols. For example, the coordination scheme may include coordinated TDMA (Co-TDMA) that distinguishes radio resources allocated to several APs based on a time axis (time domain). Additionally or alternatively, the coordination scheme may include coordinated OFDMA (C-OFDMA) that distinguishes radio resources allocated to several APs based on a frequency axis (time domain). Additionally or alternatively, the coordination scheme may include coordinated spatial reuse (Co-SR) that applies spatial reuse (SR) to at least one AP. Additionally or alternatively, the coordination scheme may include coordinated beamforming (Co-BF)/nulling that transmits by nulling interference occurring in a neighbor (for example, an adjacent AP/STA, and/or OBSS AP/OBSS STA). Additionally or alternatively, the coordination scheme may include AP selection in which an AP having a good channel state among adjacent APs (for example, at least one AP located in a BSS or OBSS and having an excellent channel state) performs transmission. Additionally or alternatively, the coordination scheme may include joint transmission (JTX) or JT in which a plurality of APs (for example, a plurality of APs included in the same BSS/OBSS, or a plurality of APs included in mutually different BSSs/OBSSs) simultaneously perform transmission and reception by coordinating, and JTX/JT may be implemented based on joint beamforming or joint MU-MIMO.

In the present disclosure, "multi-AP (coordination) operation" may also be referred to as "multi-AP (coordination) transmission". In addition, "multi-AP (coordination) operation/transmission" and "multi-AP coordination scheme (or, coordination scheme)" may be used interchangeably.

When the triggered TXOP sharing protocol is utilized for multi-AP coordination, transmissions within the BSS of each coordinating AP are divided into time units, so that each coordinating AP can perform frame exchange without affecting other coordinating APs.

In this disclosure, "frame exchange (FE)" may include a frame transmission and/or reception operation between STAs. The STA may be an AP or a non-AP STA. Herein, a frame may include various types of frames (e.g., a data frame, a control frame, and a management frame).

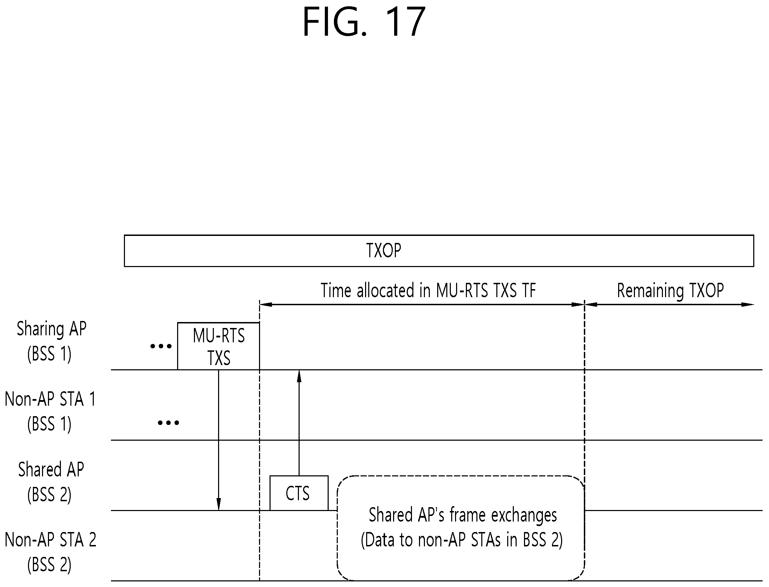

FIG. 17 shows an example of an operation diagram of single TXOP-based coordinated time division multiple access (Co-TDMA) between coordinating APs.

For example, C-TDMA can mean that each coordinating AP exchanges frames without affecting other coordinating APs by dividing transmissions within the BSS of each coordinating AP by time units.

When the triggered TXS protocol is applied to multi-AP coordination operations, the AP in the triggered TXS protocol may be the AP that shares the TXOP in the multi-AP coordination operation, and the STA in the triggered TXS protocol may be the AP that is granted the shared TXOP in the multi-AP coordination operation. In this disclosure, the AP that shares the TXOP may be referred to as a sharing AP (SAP), and the AP that is granted the TXOP by the SAP may be referred to as a shared AP (DAP). The term "SAP" here does not limit the entities sharing the TXOP to only AP STAs - the SAP may also include non-AP STAs that share the TXOP. Furthermore, the term "DAP" does not limit the entity that is granted the shared TXOP to only being an AP STA, and a DAP may also include non-AP STAs that is granted the shared TXOP (or, that transmit and receive with an AP STA that is granted the shared TXOP). Furthermore, frame exchanges performed by a DAP with non-AP STAs belonging to the DAP BSS or SAPs during the allocated time (i.e., the time allocated by the MU-RTS TXS TF in FIG. 16, which is an allocation duration for the DAP/AP2 within a TXOP indicated by the MU-RTS TXS TF transmitted from the SAP) may be referred to as BSS frame exchanges (FEs) of the DAP. For example, RTS/CTS frame exchanges between a DAP and a non-AP STA followed by data frame transmission and block ACK frame responses, UL data frame transmissions by non-AP STAs based on trigger frames transmitted from the DAP, and/or data frame transmissions by the DAP based on trigger frames transmitted from the SAP may be performed.

In order for multi-AP coordination to be achieved between two APs, the two APs may be in a connected/associated state with each other, and/or after performing a negotiation procedure for exchanging coordination request frame/coordination response frame including capability information/requirement information of each other in advance, may perform multi-AP transmission (e.g., coordinated time division multiple access (Co-TDMA), coordinated orthogonal frequency division multiple access (C-OFDMA), coordinated spatial reuse (Co-SR), coordinated beamforming (Co-BF), AP selection, or joint transmission (J-TX)) based on the obtained information. That is, in order for the multi-AP transmission to be smoothly performed, the configuration/management of the multi-AP coordination, and/or a negotiation procedure for transmission based on a specific multi-AP coordination scheme need to be performed in advance between the SAP and the DAP described above. Through the negotiation procedure, a multi-AP set may be established/configured. Therefore, the negotiation procedure may also be referred to as a multi-AP set establishment/configuration procedure.

In order for multi-AP coordination to be successfully performed, a multi-AP selection procedure (or, AP selection procedure for multi-AP coordination) for selecting a DAP with which the SAP intends to share a TXOP within a multi-AP set configured/established through a negotiation procedure, and/or for notifying that the TXOP is scheduled to be shared may be performed. Through the multi-AP selection procedure, the SAP may determine whether a TXOP sharing to the DAP is required within the obtained TXOP, and when a TXOP sharing to a specific DAP is not required, may determine a TXOP sharing to a subsequent/other DAP. Alternatively, the SAP may simply notify the target DAP that the TXOP is scheduled to be shared in the multi-AP selection procedure, and through this, may perform multi-AP coordination while reducing an overhead caused by the multi-AP selection procedure.

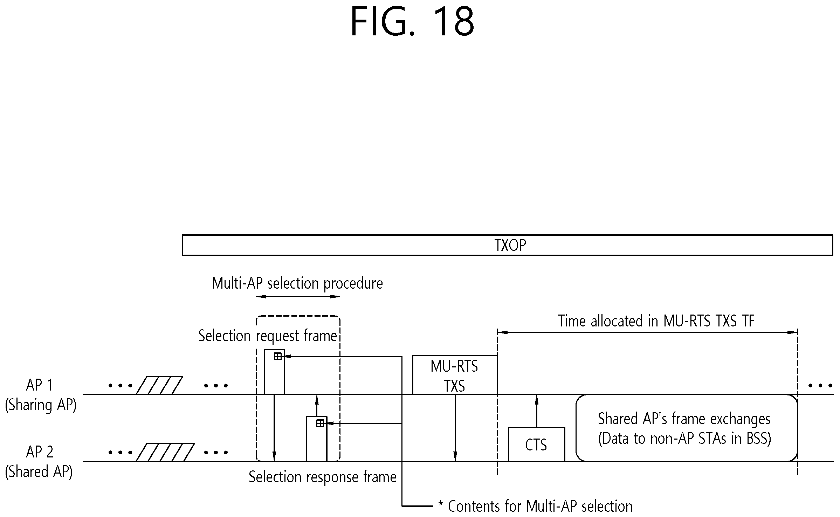

FIG. 18 illustrates an example of a multi-AP selection procedure according to an embodiment of the present disclosure.

Referring to FIG. 18, in the multi-AP selection procedure, the SAP may transmit, to one or more DAPs, a request frame (i.e., a request frame for an AP selection/selection request frame) for selecting a DAP to share a TXOP from the multi-AP set configured/established through the negotiation procedure, and the one or more DAPs receiving the request frame may transmit a response frame to the request frame (i.e., a response frame for an AP selection/selection response frame) based on whether a TXOP sharing is required. When receiving a response frame comprising an indication that a TXOP sharing is not required from the DAP(s), or when failing to receive a response frame from the DAP(s), the SAP may transmit a request frame for an AP selection to another DAP - that is, the SAP may perform an AP reselection. Alternatively, the SAP may simply notify the target DAP that the TXOP is scheduled to be shared in the multi-AP selection procedure. For example, the SAP may transmit an AP selection request frame that does not solicit a response frame to the target DAP with which the SAP intends to share the TXOP, and the DAP receiving such an AP selection request frame may prepare an operation for the scheduled TXOP sharing.

The SAP may transmit a frame for a TXOP sharing (e.g., a TXOP sharing frame/MU-RTS TXS trigger frame) to the DAP selected through the multi-AP selection procedure, and the DAP may perform a frame exchange with a non-AP STA(s) associated with the DAP in a time duration (e.g., an allocation duration) allocated by the TXOP sharing frame.

When performing the multi-AP selection procedure, a multi-AP selection request frame that the SAP transmits to the DAP needs to be more specifically defined/designed. Therefore, the present disclosure defines a structure/format of a Trigger Frame transmitted for the SAP to select a DAP that is to perform multi-AP coordination-based transmission in multi-AP coordination and/or Co-TDMA operation.

In addition, in order to initiate transmission based on a multi-AP coordination scheme such as Co-SR, Co-BF, a procedure for announcing coordination and/or performing a short-term negotiation for the corresponding coordination scheme may be required. Therefore, the present disclosure defines a structure/format of a Trigger Frame transmitted to initiate transmission based on a multi-AP coordination scheme (e.g., Co-TDMA, Co-SR, Co-BF) and/or to perform a short-term negotiation.

According to various embodiments of the present disclosure, by transmitting a multi-AP selection request frame/Trigger Frame for multi-AP operation, the SAP may share a TXOP and/or select a DAP that is to perform multi-AP operation and/or announce information related to multi-AP operation/Co-TDMA operation. In addition, the AP may check whether other APs participate in the multi-AP coordination.

In the present disclosure, the multi-AP selection request frame/Trigger Frame may serve as an initial control frame (ICF) for initiating the multi-AP coordination.

The specific designations/names proposed in the present disclosure may be changed, and are not limited thereto. For example, in the present disclosure, multi-AP selection may be used interchangeably with schedule announcement, coordination announcement, and coordination polling.

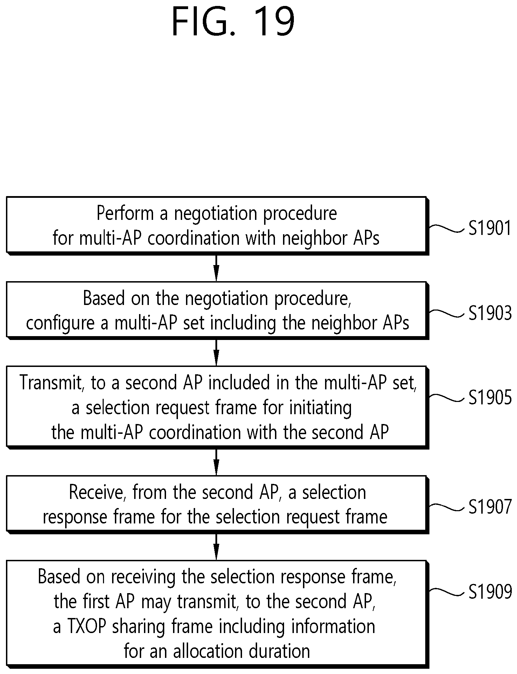

FIG. 19 illustrates an example of a method performed by a first AP according to an embodiment of the present disclosure. The first AP may be an AP that transmits an ICF for initiating a multi-AP coordination/multi-AP selection procedure.

Referring to FIG. 19, in step S1901, the first AP may perform a negotiation procedure for multi-AP coordination with neighbor APs.

In step S1903, based on the negotiation procedure, the first AP may configure a multi-AP set including the neighbor APs.

In step S1905, the first AP may transmit, to a second AP included in the multi-AP set, a selection request frame for initiating the multi-AP coordination with the second AP.

In step S1907, the first AP may receive, from the second AP, a selection response frame for the selection request frame.

In step S1909, based on receiving the selection response frame, the first AP may transmit, to the second AP, a TXOP sharing frame including information for an allocation duration.

According to various embodiments, the selection request frame may include identification information of the second AP for the multi-AP coordination.

According to various embodiments, the identification information of the second AP for the multi-AP coordination may be included in an association identifier (AID) 12 field within a user information field of the selection request frame. The identification information of the second AP may include at least one of a basic service set identifier (BSSID) of the second AP, a BSS color of the second AP, an ID of the multi-AP set, or an ID allocated to the second AP within the multi-AP set.

According to various embodiments, the identification information of the second AP for the multi-AP coordination may include an address of the second AP. A receiver address (RA) field of the selection request frame may be set to the address of the second AP.

According to various embodiments, the selection request frame may be an initial control frame (ICF) for initiating the multi-AP coordination. The selection response frame may be an initial control reply (ICR) for the ICF.

According to various embodiments, the selection request frame may include at least one of information for a type of an ICF (e.g., ICF type), information for a coordination scheme (e.g., MAP coordination type), information indicating that the selection request frame requests selection of an AP for the multi-AP coordination (e.g., MAP selection/MAP procedure), information for a type of a response to the selection request frame (e.g., response type), information for whether an ICR is allowed (e.g., general response), or coordination dependent information.

According to various embodiments, the coordination dependent information may include at least one of an identifier (ID) of the multi-AP set (e.g., MAP group ID), an ID allocated to the second AP within the multi-AP set (e.g., AP ID), information for an address of the second AP (e.g., address), information for an operating channel (e.g., operating channel)), information for an operating bandwidth (e.g., operating bandwidth), information for a scheduled TXOP duration (e.g., scheduled TXOP duration), information for a time of the TXOP sharing (e.g., expected TXOP sharing time), low-latency traffic information, or information for a priority of a current coordination scheme among coordination schemes (e.g., coordination priority).

According to various embodiments, the selection response frame may include at least one of an identifier (ID) of the multi-AP set, an ID allocated to the second AP within the multi-AP set, information for an address of the second AP, information for an operating channel, information for an operating bandwidth, information for a TXOP duration required by the second AP (e.g., required TXOP duration), information for a buffer status of the second AP (e.g., buffer status), information for whether the TXOP sharing is needed (e.g., TXOP sharing required), low-latency traffic information, or a status code for a request by the selection request frame.

According to various embodiments, the selection request frame may be a trigger frame including a trigger type subfield set to a reserved value among values of the trigger type subfield. The reserved value may be a value among 9 to 15.

According to various embodiments, the selection request frame may be a multi-user (MU)-RTS TXOP sharing (TXS) trigger frame.

According to various embodiments, the selection request frame may be a buffer status report poll (BSRP) trigger frame.

According to various embodiments, a common information field of the BSRP trigger frame may include at least one of information for a type of an ICF, information for a coordination scheme, information indicating that the selection request frame requests selection of an AP for the multi-AP coordination, information for a type of a response to the selection request frame, or information for whether an ICR is allowed. A special user information field of the BSRP trigger frame may include coordination dependent information.

According to various embodiments, a special user information field of the BSRP trigger frame may include at least one of information for a type of an ICF, information for a coordination scheme, information indicating that the selection request frame requests selection of an AP for the multi-AP coordination, information for a type of a response to the selection request frame, information for whether an ICR is allowed, or coordination dependent information.

According to various embodiments, a common information field or a user information field of the BSRP trigger frame may include information indicating that the special user information field is present.

According to various embodiments, the selection response frame may be a quality of service (QoS) null frame, a QoS data frame, a clear-to-send (CTS) frame, a CTS-to-Self frame, a block acknowledgement (BA) frame, or an action frame.

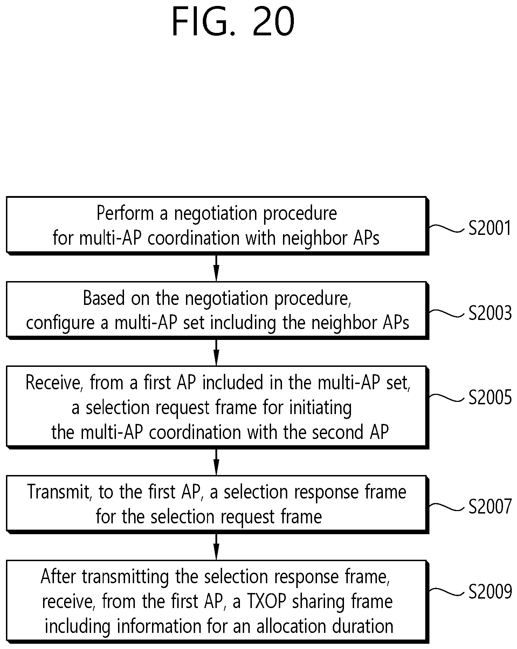

FIG. 20 shows an example of a method performed by a second AP according to an embodiment of the present disclosure. The second AP may be an AP that transmits an ICR for an ICF for initiating a multi-AP coordination/multi-AP selection procedure.

Referring to FIG. 20, in step S2001, the second AP may perform a negotiation procedure for multi-AP coordination with neighbor APs.

In step S2003, based on the negotiation procedure, the second AP may configure a multi-AP set including the neighbor APs.

In step S2005, the second AP may receive, from a first AP included in the multi-AP set, a selection request frame for initiating the multi-AP coordination with the second AP.

In step S2007, the second AP may transmit, to the first AP, a selection response frame for the selection request frame.

In step S2009, after transmitting the selection response frame, the second AP may receive, from the first AP, a TXOP sharing frame including information for an allocation duration.

Hereinafter, a detailed implementation regarding Trigger Frame design in an AP selection procedure for multi-AP coordination is described.

In the present disclosure, a Trigger Frame that may be transmitted in a multi-AP selection procedure in which the SAP selects a DAP for sharing a TXOP in Co-TDMA based transmission, which is a multi-AP coordination scheme, may be defined/designed. In addition, a Trigger Frame that may be regarded as an initial control frame for initiating multi-AP operation in an individual multi-AP coordination procedure may be defined/designed. In the present disclosure, a structure/format of a Trigger Frame for a multi-AP selection procedure in multi-AP coordination and/or Co-TDMA operation may be defined/designed.

### I. Defining a new Trigger Frame type

In some implementations, a new type of Trigger Frame may be proposed/designed for a multi-AP selection procedure in multi-AP coordination and/or Co-TDMA based transmission. For example, a new type of Trigger Frame that may be utilized in multi-AP coordination and/or Co-TDMA based transmission may be implemented using a reserved value (e.g., 9 to 15) among the types of the Trigger Frame (e.g., the trigger type subfield values of <Table 1>).

### I-1. Multi-AP (multi-AP, MAP) Trigger Frame

A MAP Trigger Frame (Trigger Frame, TF) for supporting multi-AP coordination/Co-TDMA based transmission may be implemented/defined. The specific name (designation) of the Trigger Frame may be changed. The MAP TF may allocate and/or request a resource for transmission of one or more TB PPDUs between APs, and the AP responding to the TF may also deliver information necessary for transmitting the TB PPDU.

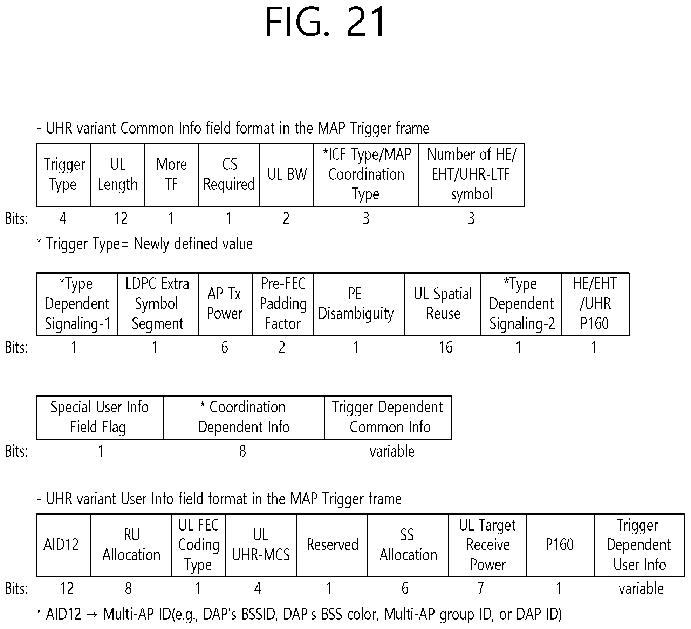

FIG. 21 illustrates an example of a MAP Trigger Frame format for a multi-AP selection procedure according to an embodiment of the present disclosure.

Referring to FIG. 21, the MAP Trigger Frame may include a Common Info field and a User Info field, and the fields included in the Common Info field/User Info field and the number of bits for each field are illustrated. The designation (name) and/or the number of bits of the field may be changed, and are not limited thereto. In addition, the MAP Trigger Frame may further include one or more fields.

Alternatively, another Trigger Frame variant (e.g., a BSRP Trigger Frame) other than the MAP Trigger Frame may be utilized.

Alternatively, a block acknowledgement request (BAR) frame other than the Trigger Frame may be utilized.

The Common Info field/User Info field of the MAP Trigger Frame may include at least one of the following fields:
- ICF type: indicates the type of the ICF. For example, the EHT Reserved or Reserved bit of the Common Info field may be utilized for the ICF Type field.

The ICF Type field may indicate for which purpose the corresponding Trigger Frame is transmitted. For example, the ICF Type field may indicate for which purpose a TF that may be utilized as an ICF in dynamic power saving (DPS), inter-device coexistence (IDC), dynamic subband operation (DSO) and/or multi-AP coordination is transmitted. For example, bit 0 may indicate that the corresponding Trigger Frame is a Basic TF. Bit 1 may indicate that the corresponding Trigger Frame is a TF for multi-AP coordination/operation. Bit 2 may indicate that the corresponding Trigger Frame is a TF for DPS operation. Bit 3 may indicate that the corresponding Trigger Frame is a TF for IDC operation. Bit 4 may indicate that the corresponding Trigger Frame is a TF for DSO operation. Other bits may be reserved.

The ICF Type/MAP Coordination Type field of FIG. 21 may be replaced with the ICF Type field. In this case, the MAP Coordination Type field may use some bits of the Coordination Dependent Information field (for example, utilizing 8 bits as the MAP Coordination Type field and the Coordination Dependent Information field), or may be defined as a subfield of the Coordination Dependent Information field.

Additionally or alternatively, the ICF Type field may utilize the EHT Reserved bit (7 bits) and/or the Reserved bit (4 bits), and instead of indicating one specific ICF type, may be used for one or more operations such as DPS, IDC, DSO, multi-AP coordination and/or to solicit initial control reply (ICR) information. For example, each bit of the 7 bits may indicate a specific type (e.g., DPS, IDC, DSO, MAP). A combination of each bit (e.g., a bitmap) may be set to solicit ICR information. For example, in the case of B56: MAP, B57: DPS, B58: IDC, B59: DSO (or non-primary channel access (NPCA)), other bits: reserved, 1100 may solicit ICR information for MAP and DPS.
- MAP coordination type: information for a multi-AP coordination scheme such as Co-OFDMA, Co-TDMA, Co-SR.

In some implementations, the EHT Reserved bit (7 bits) or the Reserved bit (4 bits) of the Common Info field may be utilized for the MAP Coordination Type field. For example, a new field for indicating the MAP coordination type may be defined by utilizing one or more bits among the EHT Reserved bits (7 bits) (for example, utilizing 1 to n bits according to the number of possible multi-AP coordination schemes). For example, a new field for indicating the MAP coordination type may be defined by utilizing one or more bits among the reserved bits (4 bits) (for example, utilizing 1 to n bits according to the number of possible multi-AP coordination schemes). For example, a value of 0 may indicate that the corresponding Trigger Frame is a TF for Co-TDMA operation. A value of 1 may indicate that the corresponding Trigger Frame is a TF for Co-SR operation. A value of 2 may indicate that the corresponding Trigger Frame is a TF for Co-BF operation. Other bits may be reserved.

In some implementations, as illustrated in FIG. 21, the Triggered TXOP Sharing Mode field (2 bits) and the Reserved bit (1 bit) may be combined/extended for the MAP Coordination Type field. For example, the combined/extended 3 bits may indicate a multi-AP coordination scheme such as Co-OFDMA, Co-TDMA, Co-SR, J-TX that is currently operating.

Additionally or alternatively, the MAP Coordination Type field may be included in the User Info field or the Special User Info field.
- Multi-AP selection (or multi-AP procedure): indicates a Trigger Frame (i.e., MAP TF) for a unified multi-AP selection procedure for multi-AP coordination.

In some implementations, the EHT Reserved bit (7 bits) or the Reserved bit (4 bits) of the Common Info field may be utilized for the Multi-AP Selection field. For example, as illustrated in FIG. 21, 1 bit corresponding to the Type Dependent Signaling-1 or Type Dependent Signaling-2 field may be utilized to indicate that it is a TF transmitted for the multi-AP selection procedure. In this case, bit 0 indicates that the corresponding TF is not transmitted for the multi-AP selection procedure, and bit 1 may indicate that the corresponding TF is transmitted for the multi-AP selection procedure.

Additionally or alternatively, 1 bit may be additionally utilized to indicate one of the procedures for multi-AP coordination. For example, the corresponding 1 bit may indicate that it is a TF delivered for a specific procedure among the procedures for multi-AP coordination. In this case, bit 0 may indicate that the corresponding TF is the corresponding TF is not transmitted for the multi-AP selection procedure. Bit 1 may indicate that the corresponding TF is transmitted for the multi-AP selection procedure. Bit 2 may indicate that the corresponding TF is a TF transmitted for a TXOP procedure (e.g., time allocation) or a coordination triggering procedure (i.e., a procedure for initiating/triggering another multi-AP coordination-based transmission). Additionally or alternatively, bit 2 may replace bit 0. That is, bit 0 may be utilized for the indication by bit 2. Bit 3 may indicate that the corresponding TF is a TF transmitted for a TXOP return procedure.

In some implementations, the reserved bit of the User Info field may be utilized for the Multi-AP Selection field.

Additionally or alternatively, one or more User Info field(s) having the same AID may exist, and an additional User Info field may include a bit/field for indicating the multi-AP selection (or, multi-AP procedure).

Additionally or alternatively, the Special User Info field may be utilized for the Multi-AP Selection field.

Additionally or alternatively, some bits of the Coordination Dependent Information field illustrated in FIG. 21 may be utilized for the Multi-AP Selection field.
- Response type: indicates the type of a response frame for the transmitted TF and/or the type of information solicited from the receiving device.

In some implementations, one or more Type Dependent Signaling bits illustrated in FIG. 21 may be utilized for the Response Type field.

In some implementations, some bits of the Coordination Dependent Information field illustrated in FIG. 21 may be utilized for the Response Type field. For example, it may indicate for which purpose a TF that may be utilized as an ICF in DPS, IDC, DSP, multi-AP coordination is transmitted and/or which response frame it solicits. In this case, bit 0 or a value of 0 may indicate the receiving device to respond with a QoS Null/data frame (for example, including an A-Control field). Bit 1 or a value of 1 may indicate the receiving device to respond with a block acknowledgment (BA) frame (e.g., a multi-STA BA). Bit 2 or a value of 2 may indicate the receiving device to respond with an action frame (for example, including an A-Control field). Bit 3 or a value of 3 may be reserved. More bits may be used according to the solicitation type/method, and a bitmap may be utilized.

Additionally or alternatively, the reserved bit of the User Info field may be utilized for the Response Type field.

Additionally or alternatively, one or more User Info field(s) having the same AID may exist, and an additional User Info field may include a bit/field for indicating the response type.

Additionally or alternatively, the Special User Info field may be utilized for the Response Type field.

Additionally or alternatively, the Response Type field may utilize the EHT Reserved bit (7 bits), and be integrated with the ICF Type field to be used for one or more operations such as DPS, IDC, DSO, multi-AP coordination and/or to solicit initial control reply (ICR) information. For example, each bit of the 7 bits may indicate a specific type (e.g., DPS, IDC, DSO, MAP). A combination of each bit (e.g., a bitmap) may be set to solicit ICR information. For example, in the case of B56: MAP, B57: DPS, B58: IDC, B59: DSO (or non-primary channel access (NPCA)), other bits: reserved, 1100 may solicit ICR information for MAP and DPS.
- General response: indicates that a general ICR is allowed as a response frame for the transmitted TF.

In some implementations, the General Response field may allow a multi-STA BA (or Compressed BA) frame, an action frame and/or a QoS Null/data frame (including a new A-Control field or one or more A-Control fields) to be transmitted as a response to a basic TF.

In some implementations, the General Response field may allow a multi-STA BA (or Compressed BA) frame, an action frame and/or a QoS Null/data frame (including a new A-Control field or one or more A-Control fields) to be transmitted as a response to a BSRP TF.

In some implementations, the General Response field may allow a multi-STA BA (or Compressed BA) frame, an action frame and/or a QoS Null/data frame (including a new A-Control field or one or more A-Control fields) to be transmitted as a response to a MU-RTS (TXS) TF.

In some implementations, the General Response field may allow a multi-STA BA (or Compressed BA) frame, an action frame and/or a QoS Null/data frame (including a new A-Control field or one or more A-Control fields) to be transmitted as a response to a (MU-)BAR Trigger Frame.

For example, bit 0 of the General Response field may indicate that a general response is not allowed to the receiving device. Bit 1 of the General Response field may indicate that a general response is allowed to the receiving device.
- Coordination Dependent Info: a field that may selectively exist based on the value of the ICF type/MAP Coordination Type field, and includes information/signaling bits that need to be indicated according to the ICF type, and/or includes common information for multi-AP coordination or information for a specific coordination scheme.

In some implementations, the Coordination Dependent Information field may include/indicate common information necessary for a specific MAP coordination scheme and/or Co-TDMA operation.

For example, the Coordination Dependent Information field may include information for a Nominal TXOP Duration, which is a period during which APs participating in Co-TDMA operation coordinate with each other to perform individual FE and/or TXOP sharing/return (e.g., a nominal TXOP duration scheduled by the SAP for Co-TDMA operation). The nominal TXOP duration may mean the "scheduled TXOP duration" below.

For example, the Coordination Dependent Information field may include channel and/or bandwidth information in which the SAP is operating (e.g., a primary channel, a punctured channel, a BSS operating channel width, a maximum bandwidth). The operating channel and/or bandwidth information may include at least one of the "operating channel" information or the "operating bandwidth" information below.

In some implementations, the Coordination Dependent Information field may include/indicate coordination scheme specific or user specific information necessary for a specific MAP coordination scheme and/or Co-TDMA operation.

For example, the Coordination Dependent Information field may include information for a TXOP sharing time that the SAP expects and/or schedules. The TXOP sharing time may mean the "expected TXOP sharing time" below.

For example, the Coordination Dependent Information field may include a signaling bit notifying that the SAP may perform one or more TXOP sharings within the entire TXOP duration obtained by the SAP.

In some implementations, the Coordination Dependent Information field may include the BSS operating channel width and the index information of the primary/secondary channel that the SAP recommends to the DAP scheduled for TXOP sharing in order to increase efficiency in Co-TDMA based transmission.

In some implementations, the TF/Coordination Dependent Information field transmitted in the multi-AP selection procedure may further include at least one of A to I below, and is not limited thereto. In addition, the specific designation (name) of the fields may be changed.

For example, the TF/Coordination Dependent Information field transmitted in the multi-AP selection procedure may include "A. Multi-AP group ID" below to provide group ID information for the corresponding DAPs. In addition, the TF/Coordination Dependent Information field transmitted in the multi-AP selection procedure may include "B. Multi-AP ID" below to allow each DAP to recognize that it is information for itself.

For example, the TF/Coordination Dependent Information field transmitted in the multi-AP selection procedure may include "H. Low-latency traffic information" below to provide traffic identifier (TID)/access category (AC) information and/or stream classification service (SCS) information for low-latency traffic to the corresponding DAPs.

For example, the TF/Coordination Dependent Information field transmitted in the multi-AP selection procedure may include "I. Coordination priority" below to indicate a priority for a currently applied coordination scheme among the multi-AP coordination schemes, and/or to indicate a priority/protection level for efficient operation of Co-TDMA transmission.

Additionally or alternatively, the Coordination Dependent Information field may include at least one of the MAP Coordination Type field, the Multi-AP Selection field, or the Response Type field, or may include bit(s) corresponding thereto.

The MAP TF transmitted in the multi-AP selection procedure may further include at least one content of A to I below. The designation (name) of A to I below may be changed, and is not limited thereto. In addition, at least one content of A to I below may also be included in various Trigger Frames (e.g., a MAP-RTS Trigger Frame, a MU-RTS (TXS) Trigger Frame, a BSRP Trigger Frame) for the multi-AP selection procedure.

In addition, one or more (additional) User Info field(s) having the same AID may exist in the MAP TF, and the (additional) User Info field(s) may include at least one content of A to I below.
A. Multi-AP group ID: an ID for a group/set of APs that have configured the multi-AP coordination (e.g., 0, 1, 2, ...)
B. DAP ID: an ID locally granted from each SAP within the configured multi-AP group/set (e.g., 0, 1, 2, ...)
C. Address: address information of a DAP that is a target of TXOP sharing among the APs participating in the multi-AP coordination (or, included in the multi-AP set) (e.g., a BSS color, a BSSID for multi-AP, a multi-AP group ID and/or a DAP ID).
D. Operating channel: operating primary channel and punctured channel information.

For example, the operating channel information may include channel information that commonly operates for smooth coordination between APs participating in multi-AP operation (e.g., Co-TDMA, Co-OFDMA, Co-SR, Co-BF, AP selection, J-TX).

For example, the operating channel information may include primary channel information in which APs participating in multi-AP operation (e.g., Co-TDMA, Co-OFDMA, Co-SR, Co-BF, AP selection, J-TX) may commonly operate. In some implementations, a new field serving as the CCSF0 field in the EHT Operation Information field may be defined to indicate the channel center frequency index for a 20/40/80 MHz channel. In some implementations, a new field serving as the CCSF0 field in the EHT Operation Information field may be defined to indicate the channel center frequency for the primary 80 MHz channel of a 160 MHz channel or the channel center frequency for the primary 160 MHz channel of a 320 MHz channel. In addition, a new field serving as the CCSF1 field in the EHT Operation Information field may be defined to indicate the channel center frequency for a 160 MHz channel or the channel center frequency for a 320 MHz channel.

For example, the operating channel information may include punctured channel information of an AP participating in multi-AP operation (e.g., Co-TDMA, Co-OFDMA, Co-SR, Co-BF, AP selection, J-TX). In some implementations, a new field serving as the Disabled Subchannel Bitmap field in the EHT Operation Information field may be defined to indicate a punctured 20 MHz subchannel using a bitmap. When a bit value in the bitmap is 0, it may indicate that the corresponding 20 MHz subchannel is not punctured. When a bit value in the bitmap is 1, it may indicate that the corresponding 20 MHz subchannel is punctured.

For example, the operating channel information may include information for the primary channel of the DAP within the channel in which the SAP operates.

For example, the operating channel information may include information for the primary channel of the DAP within the operating channel excluding the punctured channel of the SAP.

E. Operating bandwidth information: operating bandwidth and maximum bandwidth information.

For example, the operating bandwidth information may include bandwidth (bandwidth, BW) information that commonly operates for smooth coordination between APs participating in multi-AP operation (e.g., Co-TDMA, Co-OFDMA, Co-SR, Co-BF, AP selection, J-TX). In some implementations, the above-described operating channel and primary channel information may be utilized.

For example, the operating bandwidth information may include maximum bandwidth information of an AP participating in multi-AP operation (e.g., Co-TDMA, Co-OFDMA, Co-SR, Co-BF, AP selection, J-TX). In some implementations, a new field serving the same role as the Channel Width field in the Control field of the EHT Operation Information field may be defined to indicate the channel width, which is the BSS BW information of each AP, as follows:
- Set to 0: indicates a 20 MHz bandwidth
- Set to 1: indicates a 40 MHz bandwidth
- Set to 2: indicates an 80 MHz bandwidth
- Set to 3: indicates a 160/80+80 MHz bandwidth
- Set to 4: indicates a 320/160+160 MHz bandwidth
- The remaining values of 5 to 7 may be reserved.

For example, the operating bandwidth information may include information of the BW field in the SIG-A field.

For example, the operating bandwidth information may include information of the UL BW field included in the Common Info field of the MU-RTS TXS TF.

For example, the operating bandwidth information may include information for the bandwidth of the DAP within the entire bandwidth in which the SAP operates.

For example, by changing/redefining the Medium Time field of the QoS Characteristics element to include a new subfield therein, a field for bandwidth indication (i.e., operating bandwidth information) may be newly added. In some implementations, a new field serving the same role as the Channel Width field in the Control field of the EHT Operation Information field may be defined to indicate the channel width, which is the BSS BW information of each AP, as follows:
- Set to 0: indicates a 20 MHz bandwidth
- Set to 1: indicates a 40 MHz bandwidth
- Set to 2: indicates an 80 MHz bandwidth
- Set to 3: indicates a 160/80+80 MHz bandwidth
- Set to 4: indicates a 320/160+160 MHz bandwidth
- The remaining values of 5 to 7 may be reserved.

F. Scheduled TXOP duration: a duration during which APs participating in multi-AP operation/Co-TDMA operation coordinate with each other to perform individual FE and/or TXOP sharing, and/or a nominal TXOP duration scheduled by the SAP for multi-AP operation/Co-TDMA operation.

For example, a new field including the scheduled TXOP duration may be defined. In some implementations, a Scheduled Duration field may be defined to indicate information necessary for multi-AP operation (e.g., Co-TDMA, Co-OFDMA, Co-SR, Co-BF, AP selection, J-TX) and a scheduled TXOP duration value. In some implementations, a Co-TDMA Operation element may be defined to indicate information necessary for multi-AP operation (e.g., Co-TDMA, Co-OFDMA, Co-SR, Co-BF, AP selection, J-TX) and a scheduled TXOP duration value.

For example, the scheduled TXOP duration may be included in a QoS Characteristics element that may be used to include negotiation information/coordination information in a pre-negotiation process for multi-AP operation (e.g., Co-TDMA, Co-OFDMA, Co-SR, Co-BF, AP selection, J-TX), or in an element that may be newly defined for negotiation for multi-AP operation (e.g., Co-TDMA, Co-OFDMA, Co-SR, Co-BF, AP selection, J-TX).

For example, the scheduled TXOP duration may be included in a UHR Operation element that may be used to include broadcast information in a broadcast process of each AP for multi-AP operation (e.g., Co-TDMA, Co-OFDMA, Co-SR, Co-BF, AP selection, J-TX), or in an element that may be newly defined for broadcast for multi-AP operation (e.g., Co-TDMA, Co-OFDMA, Co-SR, Co-BF, AP selection, J-TX).

G. Expected TXOP sharing timing: a time of TXOP sharing that the SAP expects and/or schedules.

In some implementations, a new field including the expected TXOP sharing timing may be defined. For example, an Expected TXOP Sharing Timing field may be newly defined to indicate information necessary for Co-TDMA operation and/or an expected TXOP sharing timing value.

In some implementations, a new element including the expected TXOP sharing timing may be defined. For example, a C-TDMA Operation element may be newly defined to indicate information necessary for Co-TDMA operation and/or an expected TXOP sharing timing value.

H. Low Latency traffic information: information related to low-latency traffic that each AP intends to transmit and receive.

For example, the low-latency traffic information may be included in the information of the QoS Characteristics element included in the SCS request/response frame.

For example, information of the Delay Bound field among the information of the QoS Characteristics element may be utilized. In some implementations, the delay bound field value for the QoS traffic that each AP intends to transmit may be utilized as the low-latency traffic information. Through this, the SAP may utilize it to check whether TXOP sharing is needed or to update the existing value, for a DAP that is able to complete transmission of an MSDU or A-MSDU within the time at which the TXOP duration to be shared ends (i.e., the pre-negotiated low-latency traffic information or the delay bound field value is shorter than the allocated time).

For example, information of the MSDU Lifetime field among the information of the QoS Characteristics element may be utilized. In some implementations, the MSDU Lifetime field value for the QoS traffic that each AP intends to transmit may be utilized as the low-latency traffic information. Through this, the SAP may utilize it to check whether TXOP sharing is needed or to update the existing value, for a DAP that does not discard the MSDU within the time at which the TXOP duration to be shared ends (i.e., the pre-negotiated low-latency traffic information or the MSDU Lifetime field value does not expire within the allocated time).

For example, information of the Service Start Time field among the information of the QoS Characteristics element may be utilized. In some implementations, the Service Start Time field value for the QoS traffic that each AP intends to transmit may be utilized as the low-latency traffic information. Through this, the SAP may utilize it to check whether TXOP sharing is needed or to update the existing value, for a DAP that is able to initiate the expected service period and frame exchange within the time at which the TXOP duration to be shared ends (i.e., the pre-negotiated low-latency traffic information or the Service Start Time field value is shorter than the allocated time).

For example, the low-latency traffic information may include TXOP sharing request information required/indicated by an AP that needs transmission of low-latency traffic.

For example, the low-latency traffic information may include time bound information of the low-latency traffic required/indicated by an AP that needs transmission of low-latency traffic (e.g., a minimum time-bound at which transmission of the low-latency traffic should initiate/a maximum time-bound at which transmission of the low-latency traffic should be successfully completed).

For example, the low-latency traffic information may include arrival rate information of the low-latency traffic required/indicated by an AP that needs transmission of periodic low-latency traffic (e.g., the arrival rate of the low-latency traffic after the last report event).

For example, the low-latency traffic information may include traffic identifier (TID)/access category (AC) information.

I. Coordination priority: Indicating a priority of a currently used coordination scheme among multi-AP coordination schemes, and/or indicating a priority/protection level to efficiently perform a Co-TDMA operation.

For example, an EHT reserved bit (7 bits) or a reserved bit (4 bits) of a common information field may be utilized for a coordination priority field. For example, 2 bits of the EHT reserved bits (7 bits) or the reserved bits (4 bits) may indicate a priority/protection level of a current Co-TDMA operation. Bit 0 may indicate a coordinated transmission whose priority/protection level is level 0. This may mean that a separate protection for a TXOP sharing and/or a TXOP return is not required in a Co-TDMA operation. Bit 1 may indicate a coordinated transmission whose priority/protection level is level 1-1. This may indicate that a separate protection for a TXOP sharing is required in a Co-TDMA operation. Bit 2 may indicate a coordinated transmission whose priority/protection level is level 1-2. This may mean that a separate protection for a TXOP return is required in a Co-TDMA operation. Bit 3 may indicate a coordinated transmission whose priority/protection level is level 2. This may mean that a protection for both a TXOP sharing and a TXOP return is required in a Co-TDMA operation.

The SAP may replace the AID12 field in the User Info field of the MAP TF with an ID related to the multi-AP coordination in order to select a DAP. That is, the AID12 field may include an AP ID for identifying an AP participating in the multi-AP coordination (or, included in the multi-AP set). The ID related to the multi-AP coordination may include at least one of the BSSID of the target DAP, the BSS color, the multi-AP group ID (i.e., an ID for the set/group of APs participating in the multi-AP coordination), or the DAP ID (i.e., an ID granted from the SAP within the multi-AP set/group). Alternatively, when the MAP TF is related to a single DAP, the RA field of the MAP TF may include the MAC address of the target DAP.

Therefore, the AP that has received the MAP TF of the new trigger type may decode the MAP TF to identify the multi-AP coordination type. Alternatively, when the AP receives a MAP TF in which an ID related to itself is included in the AID12 field within the User Info field, or a MAP TF in which the RA field is set to its own MAC address, the AP may identify that the MAP TF is a MAP TF for Co-TDMA/multi-AP coordination, and may decode/obtain additional information according to the indicated multi-AP coordination type. Thereafter, the DAP may transmit a TB PPDU to the SAP based on the information obtained from the TF.

Additionally or alternatively, the information included in the Common Info field/User Info field within the above-described MAP TF may be included in one or more Special User Info fields, and may be delivered from the SAP through the Special User Info field.

The multi-AP selection response frame included in the TB PPDU that the DAP transmits in the multi-AP selection procedure may include at least one content of a to j below. The designation (name) of a to j below may be changed, and is not limited thereto.
a. Multi-AP group ID: an ID for a group/set of APs that have configured the multi-AP coordination (e.g., 0, 1, 2, ...)
b. AP ID: an ID locally granted from each AP within the configured multi-AP group/set (e.g., 0, 1, 2, ...)
c. Address: address information of the target AP (e.g., a BSS color, a BSSID for multi-AP, a multi-AP group ID and/or an AP ID).
d. Operating channel: operating primary channel and punctured channel information.

For example, the operating channel information may include channel information that commonly operates for smooth coordination between APs participating in multi-AP operation (e.g., Co-TDMA, Co-OFDMA, Co-SR, Co-BF, AP selection, J-TX).

For example, the operating channel information may include primary channel information in which APs participating in multi-AP operation (e.g., Co-TDMA, Co-OFDMA, Co-SR, Co-BF, AP selection, J-TX X) may commonly operate. In some implementations, a new field serving as the CCSF0 field in the EHT Operation Information field may be defined to indicate the channel center frequency index for a 20/40/80 MHz channel. In some implementations, a new field serving as the CCSF0 field in the EHT Operation Information field may be defined to indicate the channel center frequency for the primary 80 MHz channel of a 160 MHz channel or the channel center frequency for the primary 160 MHz channel of a 320 MHz channel. In addition, a new field serving as the CCSF1 field in the EHT Operation Information field may be defined to indicate the channel center frequency for a 160 MHz channel or the channel center frequency for a 320 MHz channel.

For example, the operating channel information may include punctured channel information of an AP participating in multi-AP operation (e.g., Co-TDMA, Co-OFDMA, Co-SR, Co-BF, AP selection, J-TX). In some implementations, a new field serving as the Disabled Subchannel Bitmap field in the EHT Operation Information field may be defined to indicate a punctured 20 MHz subchannel using a bitmap. When a bit value in the bitmap is 0, it may indicate that the corresponding 20 MHz subchannel is not punctured. When a bit value in the bitmap is 1, it may indicate that the corresponding 20 MHz subchannel is punctured.

For example, the operating channel information may include information for the primary channel of the DAP within the channel in which the SAP operates.

For example, the operating channel information may include information for the primary channel of the DAP within the operating channel excluding the punctured channel of the SAP.

e. Operating bandwidth information: operating bandwidth and maximum bandwidth information.

For example, the operating bandwidth information may include bandwidth (bandwidth, BW) information that commonly operates for smooth coordination between APs participating in multi-AP operation (e.g., Co-TDMA, Co-OFDMA, Co-SR, Co-BF, AP selection, J-TX). In some implementations, the above-described operating channel and primary channel information may be utilized.

For example, the operating bandwidth information may include maximum bandwidth information of an AP participating in multi-AP operation (e.g., Co-TDMA, Co-OFDMA, Co-SR, Co-BF, AP selection, J-TX). In some implementations, a new field serving the same role as the Channel Width field in the Control field of the EHT Operation Information field may be defined to indicate the channel width, which is the BSS BW information of each AP, as follows:
- Set to 0: indicates a 20 MHz bandwidth
- Set to 1: indicates a 40 MHz bandwidth
- Set to 2: indicates an 80 MHz bandwidth
- Set to 3: indicates a 160/80+80 MHz bandwidth
- Set to 4: indicates a 320/160+160 MHz bandwidth
- The remaining values of 5 to 7 may be reserved.

For example, the operating bandwidth information may include the BW field information in the SIG-A field.

For example, the operating bandwidth information may include the UL BW field information included in the Common Info field of the MU-RTS TXS TF.

For example, the operating bandwidth information may include information for the bandwidth of the DAP within the entire bandwidth in which the SAP operates.

For example, by changing/redefining the Medium Time field of the QoS Characteristics element to include a new subfield therein, a field for bandwidth indication (i.e., operating bandwidth information) may be newly added. In some implementations, a new field serving the same role as the Channel Width field in the Control field of the EHT Operation Information field may be defined to indicate the channel width, which is the BSS BW information of each AP, as follows:
- Set to 0: indicates a 20 MHz bandwidth
- Set to 1: indicates a 40 MHz bandwidth
- Set to 2: indicates an 80 MHz bandwidth
- Set to 3: indicates a 160/80+80 MHz bandwidth
- Set to 4: indicates a 320/160+160 MHz bandwidth
- The remaining values of 5 to 7 may be reserved.

f. Required TXOP duration: information related to the TXOP duration that each AP wishes to be shared.

For example, a new field including the required TXOP duration may be defined. In some implementations, a Required Duration field may be defined to indicate information necessary for multi-AP operation (e.g., Co-TDMA, Co-OFDMA, Co-SR, Co-BF, AP selection, J-TX) and a required TXOP duration value. In some implementations, a C-TDMA Operation element may be defined to indicate information necessary for multi-AP operation (e.g., Co-TDMA, Co-OFDMA, Co-SR, Co-BF, AP selection, J-TX) and a required TXOP duration value.

For example, the required TXOP duration may be included in a QoS Characteristics element that may be used to include negotiation information/coordination information in a pre-negotiation process for multi-AP operation (e.g., Co-TDMA, Co-OFDMA, Co-SR, Co-BF, AP selection, J-TX), or in an element that may be newly defined for negotiation for multi-AP operation (e.g., Co-TDMA, Co-OFDMA, Co-SR, Co-BF, AP selection, J-TX).

For example, the required TXOP duration may be included in a UHR Operation element that may be used to include broadcast information in a broadcast process of each AP for multi-AP operation (e.g., Co-TDMA, Co-OFDMA, Co-SR, Co-BF, AP selection, J-TX), or in an element that may be newly defined for broadcast for multi-AP operation (e.g., Co-TDMA, Co-OFDMA, Co-SR, Co-BF, AP selection, J-TX).

g. Buffer status: buffer status information of each AP

h. TXOP sharing requirement: indicates whether TXOP sharing is needed as the pre-negotiated low-latency traffic information expires and/or TXOP sharing becomes unnecessary (e.g., when individual FE has already been performed). For example, whether TXOP sharing is needed may be indicated/responded using 1 bit. Bit 0 may indicate that the DAP that has received the selection request frame does not need TXOP sharing. Bit 1 may indicate that the DAP that has received the selection request frame needs TXOP sharing.

Additionally or alternatively, whether TXOP sharing is needed may be indicated by setting a specific field all to 0.

i. Low Latency traffic information: information related to low-latency traffic that each AP intends to transmit and receive.

For example, the low-latency traffic information may be included in the information of the QoS Characteristics element included in the SCS request/response frame.

For example, the Delay Bound field information among the information of the QoS Characteristics element may be utilized. In some implementations, the delay bound field value for the QoS traffic that each AP intends to transmit may be utilized as the low-latency traffic information. When there is a change from the pre-negotiated low-latency traffic information, the updated low-latency traffic information/delay bound field value may be included.

For example, the MSDU Lifetime field information among the information of the QoS Characteristics element may be utilized. In some implementations, the MSDU Lifetime field value for the QoS traffic that each AP intends to transmit may be utilized as the low-latency traffic information. When there is a change from the pre-negotiated low-latency traffic information, the updated low-latency traffic information/MSDU Lifetime field value may be included.

For example, the Service Initiate Time field information among the information of the QoS Characteristics element may be utilized. In some implementations, the Service Start Time field value for the QoS traffic that each AP intends to transmit may be utilized as the low-latency traffic information. When there is a change from the pre-negotiated low-latency traffic information, the updated low-latency traffic information/Service Start Time field value may be included.

For example, the low-latency traffic information may include TXOP sharing request information required/indicated by an AP that needs transmission of low-latency traffic.

For example, the low-latency traffic information may include time bound information of the low-latency traffic required/indicated by an AP that needs transmission of low-latency traffic (e.g., a minimum time-bound at which transmission of the low-latency traffic should initiate/a maximum time-bound at which transmission of the low-latency traffic should be successfully completed).

For example, the low-latency traffic information may include arrival rate information of the low-latency traffic required/indicated by an AP that needs transmission of periodic low-latency traffic (e.g., the arrival rate of the low-latency traffic after the last report event).

For example, the low-latency traffic information may include traffic Identifier (TID)/access category (AC) information.

j. Status Code: acceptance/rejection/recommendation information for the selection request (i.e., the selection request may be accepted/rejected for the SAP based on whether TXOP sharing is currently required for the DAP, and such an indication of acceptance/rejection may replace the above-described TXOP sharing requirement information.

For example, the status code may indicate acceptance or success.

For example, the status code may indicate rejection, or may include recommendation information while indicating rejection. In some implementations, the status code may include a rejection code including a rejection reason (e.g., REJECTED_BAD_SUPPORTED_CHANNELS). In some implementations, the status code may include a rejection code including recommendation information (e.g., REJECTED_WITH_SUGGESTED_CHANGES). If the value of the status code includes rejection and/or recommendation information, information for a new selection request may also be included. That is, the DAP that has received the selection request frame may include the above-described operating channel, bandwidth, required TXOP duration, low-latency traffic information and/or additional information for UHR STA support in the multi-AP selection response frame.

### II-2. Multi-AP RTS (MAP-RTS) Trigger Frame

In some implementations, a MAP-RTS Trigger Frame for supporting multi-AP coordination/C-TDMA based transmission may be defined. The specific name (designation) of the MAP-RTS Trigger Frame may be changed. The MAP-RTS TF may be designed based on the structure/format of the MU-RTS TF and/or the MU-RTS TXS TF.

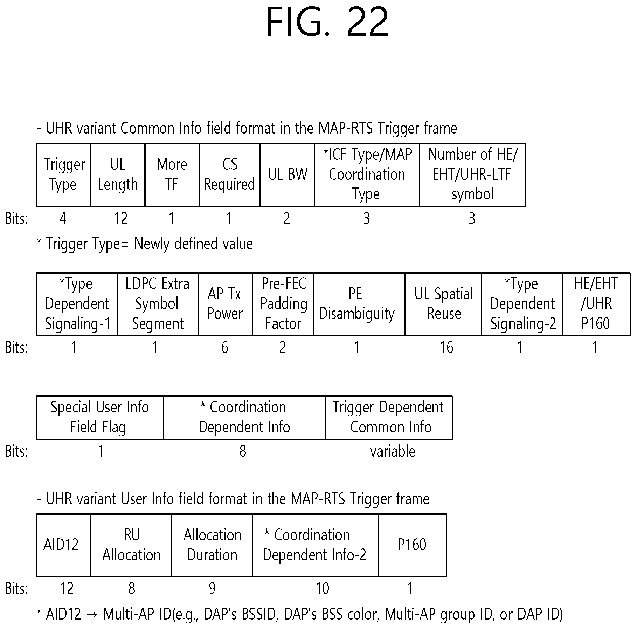

FIG. 22 illustrates an example of a MAP-RTS Trigger Frame format for a multi-AP selection procedure.

Referring to FIG. 22, the MAP-RTS Trigger Frame may include a Common Info field and a User Info field, and the fields included in the Common Info field/User Info field and the number of bits for each field are illustrated. The designation (name) and/or the number of bits of the field may be changed, and are not limited thereto. In addition, the MAP-RTS Trigger Frame may further include one or more fields.

The Common Info field/User Info field of the MAP-RTS Trigger Frame may include at least one of the following fields:
- ICF type: may indicate the same information as that included in the MAP Trigger Frame.
- MAP coordination type: may indicate the same information as that included in the MAP Trigger Frame. Additionally or alternatively, the MAP Coordination Type field may be defined as some bits and/or a subfield of the Coordination Dependent Information-2 field.
- Multi-AP selection (or multi-AP procedure): may indicate the same information as that included in the MAP Trigger Frame. Additionally or alternatively, the multi-AP selection (or multi-AP procedure) field may be defined as some bits and/or a subfield of the Coordination Dependent Information-2 field.
- Response type: indicates the type of a response frame for the transmitted TF and/or the type of information solicited from the receiving device.

In some implementations, one or more Type Dependent Signaling bits illustrated in FIG. 22 may be utilized for the Response Type field.

In some implementations, some bits of the Coordination Dependent Information field in the Common Info field illustrated in FIG. 22 may be utilized for the Response Type field, and/or some bits of the Coordination Dependent Information-2 field in the User Info field may be utilized for the Response Type field. For example, it may indicate for which purpose a TF that may be utilized as an ICF in DPS, IDC, DSP, multi-AP coordination is transmitted and/or which response frame it solicits. In this case, bit 0 may indicate the receiving device to respond with a CTS frame (or, a CTS-to-Self frame). Bit 1 may indicate the receiving device to respond with a QoS Null/data frame (for example, including an A-Control field). Bit 2 may indicate the receiving device to respond with a BA (block acknowledgment) frame (e.g., a multi-STA BA). Bit 3 may indicate the receiving device to respond with an action frame (for example, including an A-Control field). Bit 3 may be reserved. More bits may be used according to the solicitation type/method, and a bitmap may be utilized.

Additionally or alternatively, the reserved bit of the User Info field may be utilized for the Response Type field.

Additionally or alternatively, one or more User Info field(s) having the same AID may exist, and an additional User Info field may include a bit/field for indicating the response type.

Additionally or alternatively, the Special User Info field may be utilized for the Response Type field.
- General response: may indicate the same information as that included in the MAP Trigger Frame.
- Coordination dependent information: may indicate the same information as that included in the MAP Trigger Frame. Additionally or alternatively, user specific information of the coordination dependent information may be indicated by additionally utilizing the Coordination Dependent Information-2 field in the User Info field.

The MAP-RTS TF transmitted in the multi-AP selection procedure may further include at least one of A to I described above.

The SAP may replace the AID12 field in the User Info field of the MAP-RTS TF with an ID related to the multi-AP coordination in order to select a DAP. That is, the AID12 field may include an AP ID for identifying an AP participating in the multi-AP coordination (or, included in the multi-AP set). The ID related to the multi-AP coordination may include at least one of the BSSID of the target DAP, the BSS color, the multi-AP group ID (i.e., an ID for the set/group of APs participating in the multi-AP coordination), or the DAP ID (i.e., an ID granted from the SAP within the multi-AP set/group). Alternatively, when the MAP-RTS TF is related to a single DAP, the RA field of the MAP-RTS TF may include the MAC address of the target DAP.

Therefore, the AP that has received the MAP-RTS TF of the new trigger type may decode the MAP-RTS TF to identify the multi-AP coordination type. Alternatively, when the AP receives a MAP-RTS TF in which an ID related to itself is included in the AID12 field within the User Info field, or a MAP-RTS TF in which the RA field is set to its own MAC address, the AP may identify that the MAP-RTS TF is a MAP-RTS TF for C-TDMA/multi-AP coordination, and may decode/obtain additional information according to the indicated multi-AP coordination type. Thereafter, the DAP may transmit a CTS frame (or, a CTS-to-Self) frame to the SAP based on the information obtained from the TF.

Additionally or alternatively, the information included in the Common Info field/User Info field within the above-described MAP-RTS TF may be included in one or more Special User Info fields, and may be delivered from the SAP through the Special User Info field.

In the multi-AP selection procedure based on the MAP-RTS Trigger Frame, transmission of a CTS frame (or, a frame indicated by the response type) may mean a response to the TF transmitted by the SAP and/or acceptance of the multi-AP selection procedure. That is, if a CTS frame (or, a corresponding response frame) is not received from the DAP, the SAP may regard the multi-AP selection procedure as having failed.

### II. Utilization of the MU-RTS TXS Trigger Frame

In order to design a Trigger Frame that may be transmitted for a multi-AP selection procedure in multi-AP operation/Co-TDMA operation and/or a Trigger Frame that may be regarded as an initial control frame for initiating multi-AP operation in an individual multi-AP coordination procedure, the MU-RTS TXS TF used in the triggered TXOP sharing protocol of EHT may be utilized.

In some implementations, the multi-AP selection procedure may be initiated by transmission of the MU-RTS TXS TF based on the triggered TXOP sharing mode (i.e., mode 1 or 2) exemplified in <Table 2>. Similarly to the way that a STA allocated time in TXS mode = 1 or 2 is allowed to deliver MPDU(s) to the associated AP, the DAP may deliver MPDU(s) to the SAP that transmitted the MU-RTS TXS TF. To this end, it may be necessary for the MU-RTS TXS Trigger Frame to be transmitted between unassociated STAs (i.e., between APs).

The MU-RTS TXS TF based on the TXS mode may be defined/designed according to the following option(s):
Option 1) The MU-RTS TXS TF for the multi-AP selection procedure is based on TXS mode = 1 or 2 defined in EHT, and (new) fields related to multi-AP coordination/Co-TDMA based transmission may be separately added to the MU-RTS TXS TF for signaling for the multi-AP selection procedure.

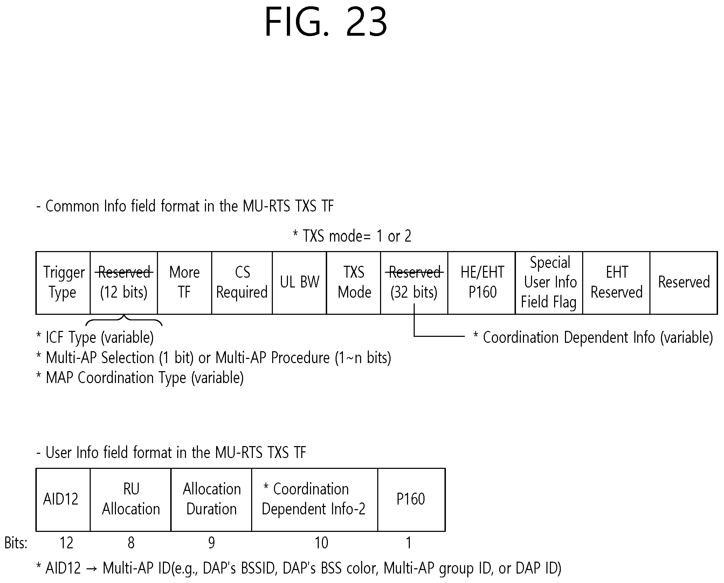

FIG. 23 illustrates an example of a MU-RTS TXS Trigger Frame format for a multi-AP selection procedure according to an embodiment of the present disclosure.

Referring to FIG. 23, the MU-RTS TXS TF may include a Common Info field/User Info field based on option 1), and the fields included in the Common Info field/User Info field and the number of bits for each field are illustrated. The designation (name) and/or the number of bits of the field may be changed, and are not limited thereto. In addition, the MU-RTS TXS Trigger Frame may further include one or more fields.

The Common Info field/User Info field of the MU-RTS TXS Trigger Frame may include at least one of the following fields:
- ICF type: may indicate the same information as that included in the MAP Trigger Frame. Additionally or alternatively, the ICF Type field may be defined using some bits among the 12 bits following the trigger type field.
- MAP coordination type: may indicate the same information as that included in the MAP Trigger Frame. Additionally or alternatively, the MAP Coordination Type field may be defined using some bits among the 12 bits following the trigger type field. Additionally or alternatively, the MAP Coordination Type field may be defined by utilizing the Reserved bit (32 bits or more). Additionally or alternatively, the MAP Coordination Type field may be included in the User Info field or the Special User Info field.
- Multi-AP selection (or multi-AP procedure): may indicate the same information as that included in the MAP Trigger Frame. Additionally or alternatively, the multi-AP selection (or multi-AP procedure) field may be defined using some bits among the 12 bits following the trigger type field. Additionally or alternatively, the multi-AP selection (or multi-AP procedure) field may be defined by utilizing the Reserved bit (32 bits or more). Additionally or alternatively, the multi-AP selection (or multi-AP procedure) field may be defined using some bits of the Coordination Dependent Information-2 field, or may be defined as a subfield of the Coordination Dependent Information-2 field.
- Response type: indicates the type of a response frame for the transmitted TF and/or the type of information solicited from the receiving device.

In some implementations, the Response Type field may be defined using some bits among the 12 bits following the trigger type field illustrated in FIG. 23.

In some implementations, the Response Type field may be defined by utilizing some bits of the Reserved bit (32 bits) following the TXS mode field in the Common Info field illustrated in FIG. 23, or by utilizing some bits of the Coordination Dependent Information-2 field in the User Info field. For example, it may indicate for which purpose a TF that may be utilized as an ICF in DPS, IDC, DSP, multi-AP coordination is transmitted and/or which response frame it solicits. In this case, bit 0 may indicate the receiving device to respond with a CTS frame (or, a CTS-to-Self frame). Bit 1 may indicate the receiving device to respond with a QoS Null/data frame (for example, including an A-Control field). Bit 2 may indicate the receiving device to respond with a BA (block acknowledgment) frame (e.g., a multi-STA BA). Bit 3 may indicate the receiving device to respond with an action frame (for example, including an A-Control field). Bit 3 may be reserved. More bits may be used according to the solicitation type/method, and a bitmap may be utilized.

Additionally or alternatively, one or more User Info field(s) having the same AID may exist, and an additional User Info field may include a bit/field for indicating the response type.

Additionally or alternatively, the Special User Info field may be utilized for the Response Type field.
- General response: may indicate the same information as that included in the MAP Trigger Frame.
- Coordination dependent information: may indicate the same information as that included in the MAP Trigger Frame. Additionally or alternatively, user specific information of the coordination dependent information may be indicated by additionally utilizing the Coordination Dependent Information-2 field in the User Info field.

The MU-RTS TXS TF transmitted in the multi-AP selection procedure may further include at least one content and/or field (e.g., a multi-AP group ID, a scheduled TXOP duration) of A to I described above. For example, at least one content and/or field (e.g., a multi-AP group ID, a scheduled TXOP duration) of A to I described above may be included in the Reserved bit (or, EHT Reserved bit) of the Common Info field, the reserved bit of the User Info field, one or more other User Info fields having the same AID value, and/or a Special User Info field having the same AID value or a specific AID value. The specific designation (name) of the above-described fields may be changed.

Option 2) Instead of the encoding method for the TXS mode of the MU-RTS TXS TF as in <Table 2>, a new encoding method for multi-AP coordination/Co-TDMA based transmission may be defined.

For example, the new encoding method for multi-AP coordination/Co-TDMA based transmission may be defined as in <Table 3> below:

**[Table 3]**

| **Triggered TXOP Sharing Mode subfield value** | **Description** |
|---|---|
| 0 | MU-RTS that does not initiate MU-RTS TXOP sharing procedure. |
| 1 (for Multi-AP selection) | MU-RTS that initiates Multi-AP selection procedure wherein a scheduled AP can transmit MPDU(s) addressed to its associated AP. |
| 2 (for TXS in Co-TDMA) | MU-RTS that initiates triggered TXOP sharing procedure wherein a scheduled AP can transmit MPDU(s) addressed to its associated STA. |
| 3 | Reserved. |

In addition to the TXS mode (i.e., TXS mode = 1 for Multi-AP selection) as in option 2), the MU-RTS TXS Trigger Frame may include a field for indicating a multi-AP coordination scheme (e.g., Co-OFDMA, Co-TDMA, Co-BF, Co-SR), and may separately include information included in the MU-RTS TXS Trigger Frame (e.g., a multi-AP coordination type, coordination dependent information) by utilizing a reserved field. That is, at least one content and/or fields (e.g., a multi-AP coordination type, coordination dependent information) of A to I described above may be added and/or defined within the MU-RTS TXS TF transmitted in the multi-AP selection procedure, and is not limited thereto. In addition, the specific designation (name) of the fields included in the MU-RTS TXS TF may be changed. In addition, the Reserved bit (i.e., TXS mode = 3) may indicate another multi-AP coordination scheme, and may be utilized to indicate another procedure (e.g., TXOP return) in Co-TDMA operation. Additionally or alternatively, unlike the encoding scheme using 2 bits presented in <Table 3>, an (extended) TXS mode field may be defined by utilizing some of the reserved bits following the TXS mode field (bit). That is, a TXS mode for UHR may be newly defined using 3 or more bits.

Additionally or alternatively, the new TXS mode for UHR may be utilized to distinguish the ICF type. For example, it may be defined as TXS mode = 1: multi-AP coordination, TXS mode = 2: DPS, TXS mode = 3: IDC, TXS mode = 4: DSO.

Additionally or alternatively, the new TXS mode for UHR may be utilized to distinguish the MAP coordination type. For example, it may be defined as TXS mode = 1: Co-TDMA, TXS mode = 2: Co-SR, TXS mode = 3: Co-BF.

Additionally or alternatively, the new TXS mode for UHR may be utilized to indicate multi-AP selection (or multi-AP procedure). For example, it may be defined as TXS mode = 1: multi-AP selection, TXS mode = 2: TXOP sharing, TXS mode = 3: TXOP return.

Additionally or alternatively, a reserved value among the TXS modes presented in <Table 2> may be utilized to indicate multi-AP operation (or multi-AP selection or multi-AP procedure). For example, it may be defined as TXS mode = 1: allow only UL transmission, TXS mode = 2: allow UL transmission and P2P transmission, TXS mode = 3: utilize for multi-AP purpose.

The SAP may replace the AID12 field in the User Info field of the MU-RTS TXS TF with an ID related to the multi-AP coordination in order to select a DAP. That is, the AID12 field may include an AP ID for identifying an AP participating in the multi-AP coordination (or, included in the multi-AP set). The ID related to the multi-AP coordination may include at least one of the BSSID of the target DAP, the BSS color, the multi-AP group ID (i.e., an ID for the set/group of APs participating in the multi-AP coordination), or the DAP ID (i.e., an ID granted from the SAP within the multi-AP set/group). Alternatively, when the MU-RTS TXS TF is related to a single DAP, the RA field of the MU-RTS TXS TF may include the MAC address of the target DAP.

Therefore, the AP that has received the MU-RTS TXS TF based on option 1) and/or option 2) may decode the MU-RTS TXS TF to identify that the MU-RTS TXS TF is transmitted for the multi-AP selection procedure. Alternatively, when the AP receives a MU-RTS TXS TF in which an ID related to itself is included in the AID12 field within the User Info field, or a MU-RTS TXS TF in which the RA field is set to its own MAC address, the AP may identify that the MU-RTS TXS TF is a MU-RTS TXS TF for Co-TDMA/multi-AP coordination, and may decode/obtain additional information according to the indicated multi-AP coordination type. Thereafter, the DAP may transmit a CTS frame (or, a CTS-to-Self) frame to the SAP based on the information obtained from the TF. Alternatively, the DAP may respond with a response frame solicited by the MU-RTS TXS TF.

Additionally or alternatively, the information included in the Common Info field/User Info field within the above-described MU-RTS TXS TF may be included in one or more Special User Info fields, and may be delivered from the SAP through the Special User Info field.

In the multi-AP selection procedure based on the MU-RTS TXS Trigger Frame, transmission of a CTS frame (or, a corresponding response frame) may mean a response to the TF transmitted by the SAP and/or acceptance of the multi-AP selection procedure. That is, if a CTS frame (or, a corresponding response frame) is not received from the DAP, the SAP may regard the multi-AP selection procedure as having failed.

### III. Utilization of the BSRP Trigger Frame

In order to design a Trigger Frame that may be transmitted for a multi-AP selection procedure in multi-AP operation/Co-TDMA operation and/or a Trigger Frame that may be regarded as an initial control frame for initiating multi-AP operation in an individual multi-AP coordination procedure, the buffer status report poll (BSRP) Trigger Frame among the Trigger Frame variants may be utilized. To this end, it may be necessary for the BSRP Trigger Frame to be transmitted between unassociated STAs (i.e., between APs).

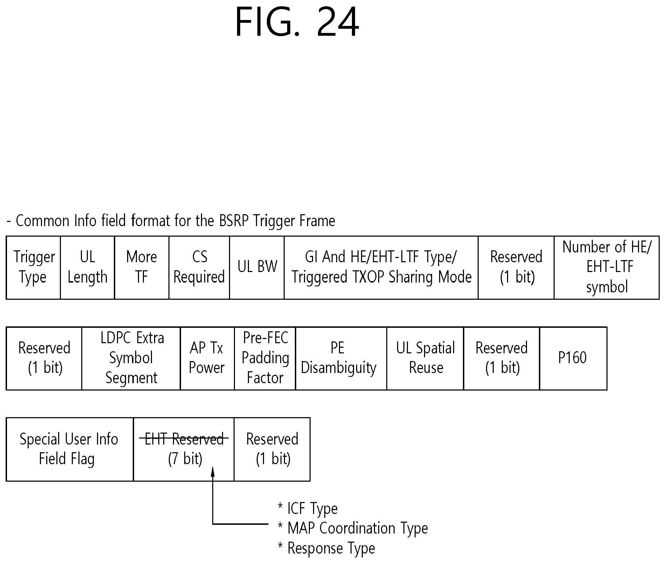

FIG. 24 illustrates an example of a BSRP Trigger Frame format for a multi-AP selection procedure according to an embodiment of the present disclosure.

The size of the User Info field of the BSRP TF may not be sufficient to include additional information. Therefore, the Common Info field of the BSRP TF may include the main fields, and other fields may be included in the Special User Info field. Additionally or alternatively, similarly to the way that the MU-RTS TF defines and utilizes a separate MU-RTS TXS TF based on the Triggered TXOP Sharing Mode (2 bits) field, a BSRP initial control (initial control, IC) TF may be defined/utilized based on the GI And HE/EHT-LTF Type/Triggered TXOP Sharing Mode field. In this case, the Common Info field/User Info field of the BSRP IC TF may be newly designed. The name (designation) and/or the number of bits of the fields may be changed, and are not limited thereto. In addition, the BSRP TF may further include one or more fields, and is not limited thereto.

The Common Info field/(special) User Info field of the BSRP TF may include at least one of the following fields:
- ICF type: may indicate the same information as that included in the MAP Trigger Frame. For example, the ICF Type field may be defined using some bits among the EHT Reserved (7 bits).
- MAP coordination type: may indicate the same information as that included in the MAP Trigger Frame. For example, the MAP Coordination Type field may be defined using some bits among the EHT Reserved (7 bits). Additionally or alternatively, the MAP Coordination Type field may be included in the User Info field or the Special User Info field.
- Response type: indicates the type of a response frame for the transmitted TF and/or the type of information solicited from the receiving device.

In some implementations, the Response Type field may be defined by utilizing some bits of the EHT Reserved bit illustrated in FIG. 24. For example, it may indicate for which purpose a TF that may be utilized as an ICF in DPS, IDC, DSP, multi-AP coordination is transmitted and/or which response frame it solicits. In this case, bit 0 may indicate the receiving device to respond with a QoS Null/data frame (for example, including an A-Control field). Bit 1 may indicate the receiving device to respond with a block acknowledgment (BA) frame (e.g., a multi-STA BA). Bit 2 may indicate the receiving device to respond with an action frame (for example, including an A-Control field). More bits may be used according to the solicitation type/method, and a bitmap may be utilized.

Additionally or alternatively, one or more User Info field(s) having the same AID may exist, and an additional User Info field may include a bit/field for indicating the response type.

Additionally or alternatively, the Special User Info field may be utilized for the Response Type field.
- Multi-AP ID or AP ID: an ID locally granted from each AP within the configured multi-AP set/group (e.g., 0, 1, 2, ...). For example, the corresponding multi-AP ID or AP ID may be included in the AID12 field within the User Info field of the Trigger Frame.

In order to include additional multi-AP coordination related information, a new Special User Info field for UHR may be defined/included within the BSRP TF. Additionally or alternatively, the above-described ICF type, MAP coordination type, Response Type fields may also be included in the new Special User Info field for UHR.

To this end, a UHR Special User Info field flag (or, UHR function control indication) field may be newly defined using 1 bit among the EHT Reserved bit (7 bits), and the value of the UHR Special User Info field flag may be set to 1. Additionally or alternatively, a Reserved bit (1 bit) in the User Info field may indicate, in a user-specific manner, whether a newly defined UHR Special User Info field for multi-AP coordination and/or according to the operation type indicated by the ICF Type field is present (i.e., the UHR Special User Info field flag may be defined using the reserved bit in the User Info field). The UHR Special User Info field flag may be defined and/or included to indicate whether a UHR Special User Info field including additional information is present.

Therefore, in order to include at least one of the information A to I for the multi-AP coordination operation and/or the additional fields mentioned in the present disclosure (e.g., the Coordination Dependent Information field), the indication value of the AID12 field within the UHR Special User Info field may be newly defined (e.g., AID of the Special User Info field = 2007). In EHT, the Special User Info field may be identified by an AID12 field value of 2007. Similarly to the definition of the Special User Info field of EHT, a separate UHR Special User Info field (e.g., a UHR Special User Info field) for including additional information according to multi-AP operation and/or various ICF types may be defined. In order to indicate that the corresponding UHR Special User Info field is a new Special User Info field in UHR, the value of the AID12 field may be set to a reserved value (e.g., one value among 2008 to 2044 or one value among 2047 to 4094). The UHR Special User Info field identified through the new AID12 value may be arranged following the Common Info field, arranged following the User Info field, or arranged following the Special User Info field (of EHT). Additionally or alternatively, the UHR Special User Info field may be arranged before or after the User Info field for the corresponding user.

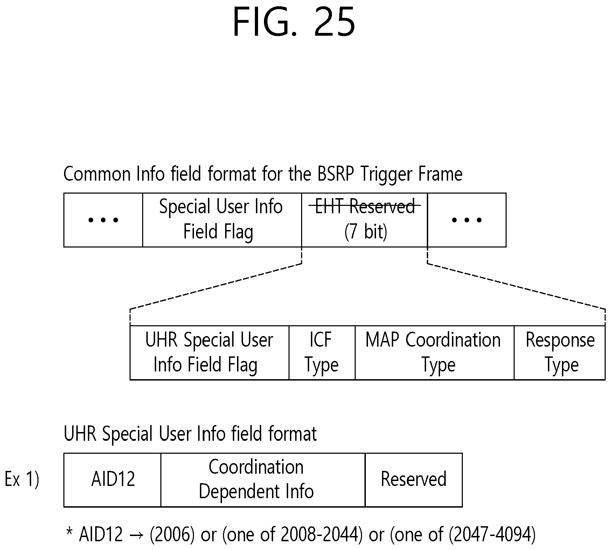

FIG. 25 illustrates a first example of a UHR Special User Info field according to an embodiment of the present disclosure.

Referring to FIG. 25, some fields (e.g., ICF type, MAP coordination type, response type) may be indicated by utilizing the EHT Reserved field in the Common Info field, and the remaining additional information (e.g., coordination dependent information) may be included in the UHR Special User Info field.

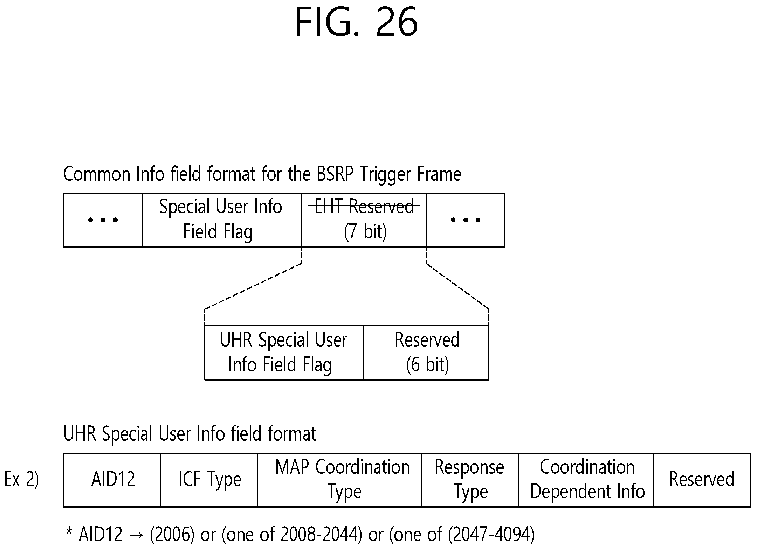

FIG. 26 illustrates a second example of a UHR Special User Info field according to an embodiment of the present disclosure.

Referring to FIG. 26, 1 bit of the EHT Reserved field in the Common Info field may indicate whether the UHR Special User Info field is present, and the related fields may be included in the UHR Special User Info field.

The Coordination Dependent Information field may include at least one content of A to I described above and/or the additional fields mentioned in the present disclosure.

Additionally or alternatively, one or more User Info fields having the same AID12 field value may exist, and subsequent User Info fields having the same AID12 field value arranged consecutively or non-consecutively may include user-specific additional information according to the ICF type.

The technical features of the present disclosure described above can be applied to various devices and methods. For example, the technical features of the present disclosure described above can be performed/supported by the devices of FIG. 1 and/or FIG. 5. For example, the technical features of the present disclosure described above can be applied only to a part of FIG. 1 and/or FIG. 5. For example, the technical features of the present disclosure described above can be implemented based on the processing chips 114, 124 of FIG. 1, or implemented based on the processors 111, 121 and the memories 112, 122 of FIG. 1, or implemented based on the processor 510 and the memory 520 of FIG. 5.

For example, the processor 121 and/or processing chip 124 of FIG. 1 may be configured to execute instructions stored in the memory 122 to perform operations performed by the first AP in the present disclosure. The operations comprise: performing a negotiation procedure for multi-AP coordination with neighbor APs; based on the negotiation procedure, configuring a multi-AP set including the neighbor APs; transmitting to a second AP included in the multi-AP set, a selection request frame for initiating the multi-AP coordination with the second AP; receiving, from the second AP, a selection response frame for the selection request frame; and based on receiving the selection response frame, transmitting, to the second AP, a TXOP sharing frame including information for an allocation duration.

For example, the processor 111, the processing chip 114 of FIG. 1 and/or the processor 510 of FIG. 5 may be configured to execute instructions stored in the memory 112, 520 to perform operations performed by the second AP in the present disclosure. The operations comprise: performing a negotiation procedure for multi-AP coordination with neighbor APs; based on the negotiation procedure, configuring a multi-AP set including the neighbor APs; receiving, from a first AP included in the multi-AP set, a selection request frame for initiating the multi-AP coordination with the second AP; transmitting, to the first AP, a selection response frame for the selection request frame; and after transmitting the selection response frame, receiving, from the first AP, a TXOP sharing frame including information for an allocation duration.

The technical features of the present disclosure can be implemented based on a computer readable medium (CRM) (e.g., non-transitory CRM). For example, the CRM in the present disclosure may comprise at least one CRM having stored thereon a program code implementing instructions executed by at least one processor.

For example, the CRM may be the memory 122 of FIG. 1 and/or a separate external memory/storage medium/disk. The CRM may store instructions that perform operations performed by the first AP in the present disclosure based on being executed by a processor (e.g., the processor 121 and/or the processing chip 124 of FIG. 1). The operations comprise: performing a negotiation procedure for multi-AP coordination with neighbor APs; based on the negotiation procedure, configuring a multi-AP set including the neighbor APs; transmitting to a second AP included in the multi-AP set, a selection request frame for initiating the multi-AP coordination with the second AP; receiving, from the second AP, a selection response frame for the selection request frame; and based on receiving the selection response frame, transmitting, to the second AP, a TXOP sharing frame including information for an allocation duration.

For example, the CRM may be the memory 112 of FIG. 1, the memory 520 of FIG. 5, and/or a separate external memory/storage medium/disk. The CRM may store instructions that perform operations performed by the second AP in the present disclosure based on being executed by a processor (e.g., the processor 111, the processing chip 114 of FIG. 1, and/or the processor 510 of FIG. 5). The operations comprise: performing a negotiation procedure for multi-AP coordination with neighbor APs; based on the negotiation procedure, configuring a multi-AP set including the neighbor APs; receiving, from a first AP included in the multi-AP set, a selection request frame for initiating the multi-AP coordination with the second AP; transmitting, to the first AP, a selection response frame for the selection request frame; and after transmitting the selection response frame, receiving, from the first AP, a TXOP sharing frame including information for an allocation duration.

The foregoing technical features of this disclosure are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The present disclosure may have various advantageous effects.

For example, in the present disclosure, a structure/format of a Trigger Frame transmitted for an SAP to select a DAP that is to perform multi-AP coordination-based transmission in multi-AP operation/C-TDMA operation is defined. Using the Trigger Frame according to various embodiments of the present disclosure, the SAP may perform a multi-AP selection procedure for selecting a DAP.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus, and technical features in method claim(s) and apparatus claim(s) can be combined to be implemented or performed in a method.

## Claims

1. A method comprising:
performing, by a first access point (AP), a negotiation procedure for multi-AP coordination with neighbor APs;
based on the negotiation procedure, configuring, by the first AP, a multi-AP set including the neighbor APs;
transmitting, by the first AP to a second AP included in the multi-AP set, a selection request frame for initiating the multi-AP coordination with the second AP;
receiving, by the first AP from the second AP, a selection response frame for the selection request frame; and
based on receiving the selection response frame, transmitting, by the first AP to the second AP, a TXOP sharing frame including information for an allocation duration.

2. The method of claim 1, wherein the selection request frame includes identification information of the second AP for the multi-AP coordination.

3. The method of claim 2, wherein the identification information of the second AP for the multi-AP coordination is included in an association identifier (AID) 12 field within a user information field of the selection request frame, and
wherein the identification information of the second AP includes at least one of a basic service set identifier (BSSID) of the second AP, a BSS color of the second AP, an ID of the multi-AP set, or an ID allocated to the second AP within the multi-AP set.

4. The method of claim 2, wherein the identification information of the second AP for the multi-AP coordination includes an address of the second AP, and
wherein a receiver address (RA) field of the selection request frame is set to the address of the second AP.

5. The method of claim 1, wherein the selection request frame is an initial control frame (ICF) for initiating the multi-AP coordination, and
wherein the selection response frame is an initial control reply (ICR) for the ICF.

6. The method of claim 1, wherein the selection request frame includes at least one of information for a type of an ICF, information for a coordination scheme, information indicating that the selection request frame requests selection of an AP for the multi-AP coordination, information for a type of a response to the selection request frame, information for whether an ICR is allowed, or coordination dependent information.

7. The method of claim 6, wherein the coordination dependent information includes at least one of an identifier (ID) of the multi-AP set, an ID allocated to the second AP within the multi-AP set, information for an address of the second AP, information for an operating channel, information for an operating bandwidth, information for a scheduled TXOP duration, information for a time point of the TXOP sharing, low-latency traffic information, or information for a priority of a current coordination scheme among coordination schemes.

8. The method of claim 1, wherein the selection response frame includes at least one of an identifier (ID) of the multi-AP set, an ID allocated to the second AP within the multi-AP set, information for an address of the second AP, information for an operating channel, information for an operating bandwidth, information for a TXOP duration required by the second AP, information for a buffer status of the second AP, information for whether the TXOP sharing is needed, low-latency traffic information, or a status code for a request by the selection request frame.

9. The method of claim 1, wherein the selection request frame is a trigger frame including a trigger type subfield set to a reserved value among values of the trigger type subfield, and
wherein the reserved value is a value among 9 to 15.

10. The method of claim 1, wherein the selection request frame is a multi-user (MU)-RTS TXOP sharing (TXS) trigger frame.

11. The method of claim 1, wherein the selection request frame is a buffer status report poll (BSRP) trigger frame.

12. The method of claim 11, wherein a common information field of the BSRP trigger frame includes at least one of information for a type of an ICF, information for a coordination scheme, information indicating that the selection request frame requests selection of an AP for the multi-AP coordination, information for a type of a response to the selection request frame, or information for whether an ICR is allowed, and
wherein a special user information field of the BSRP trigger frame includes coordination dependent information.

13. The method of claim 11, wherein a special user information field of the BSRP trigger frame includes at least one of information for a type of an ICF, information for a coordination scheme, information indicating that the selection request frame requests selection of an AP for the multi-AP coordination, information for a type of a response to the selection request frame, information for whether an ICR is allowed, or coordination dependent information.

14. The method of claim 12 or 13, wherein a common information field or a user information field of the BSRP trigger frame includes information indicating that the special user information field is present.

15. The method of claim 1, wherein the selection response frame is a quality of service (QoS) null frame, a QoS data frame, a clear-to-send (CTS) frame, a CTS-to-Self frame, a block acknowledgement (BA) frame, or an action frame.

16. A first access point (AP) comprising:
a transceiver;
a memory; and
at least one processor operatively coupled to the transceiver and the memory,
wherein the memory stores instructions that, based on being executed by the at least one processor, perform operations comprising:
performing a negotiation procedure for multi-AP coordination with neighbor APs;
based on the negotiation procedure, configuring a multi-AP set including the neighbor APs;
transmitting to a second AP included in the multi-AP set, a selection request frame for initiating the multi-AP coordination with the second AP;
receiving, from the second AP, a selection response frame for the selection request frame; and
based on receiving the selection response frame, transmitting, to the second AP, a TXOP sharing frame including information for an allocation duration.

17. An apparatus comprising:
at least one processor; and
at least one memory operatively coupled to the at least one processor,
wherein the at least one memory stores instructions that, based on being executed by the at least one processor, perform operations comprising:
performing a negotiation procedure for multi-AP coordination with neighbor APs;
based on the negotiation procedure, configuring a multi-AP set including the neighbor APs;
transmitting to a second AP included in the multi-AP set, a selection request frame for initiating the multi-AP coordination with the second AP;
receiving, from the second AP, a selection response frame for the selection request frame; and
based on receiving the selection response frame, transmitting, to the second AP, a TXOP sharing frame including information for an allocation duration.

18. A non-transitory computer readable medium (CRM) having stored thereon a program code implementing instructions that, based on being executed by at least one processor, perform operations comprising:
performing a negotiation procedure for multi-AP coordination with neighbor APs;
based on the negotiation procedure, configuring a multi-AP set including the neighbor APs;
transmitting to a second AP included in the multi-AP set, a selection request frame for initiating the multi-AP coordination with the second AP;
receiving, from the second AP, a selection response frame for the selection request frame; and
based on receiving the selection response frame, transmitting, to the second AP, a TXOP sharing frame including information for an allocation duration.

19. A method comprising:
performing, by a second access point (AP), a negotiation procedure for multi-AP coordination with neighbor APs;
based on the negotiation procedure, configuring, by the second AP, a multi-AP set including the neighbor APs;
receiving, by the second AP from a first AP included in the multi-AP set, a selection request frame for initiating the multi-AP coordination with the second AP;
transmitting, by the second AP to the first AP, a selection response frame for the selection request frame; and
after transmitting the selection response frame, receiving, by the second AP from the first AP, a TXOP sharing frame including information for an allocation duration.

20. A second access point (AP) comprising:
a transceiver;
a memory; and
at least one processor operatively coupled to the transceiver and the memory,
wherein the memory stores instructions that, based on being executed by the at least one processor, perform operations comprising:
performing a negotiation procedure for multi-AP coordination with neighbor APs;
based on the negotiation procedure, configuring a multi-AP set including the neighbor APs;
receiving, from a first AP included in the multi-AP set, a selection request frame for initiating the multi-AP coordination with the second AP;
transmitting, to the first AP, a selection response frame for the selection request frame; and
after transmitting the selection response frame, receiving, from the first AP, a TXOP sharing frame including information for an allocation duration.
